(19) Europäisches Patentamt / European Patent Office / Office européen des brevets

(11) **EP 3 499 497 A1**

(12) **EUROPEAN PATENT APPLICATION**
published in accordance with Art. 153(4) EPC

(43) Date of publication:
**19.06.2019 Bulletin 2019/25**

(51) Int Cl.:
**G10H 1/00** *(2006.01)*　　**H04S 7/00** *(2006.01)*

(21) Application number: **16912624.0**

(86) International application number:
**PCT/JP2016/073265**

(22) Date of filing: **08.08.2016**

(87) International publication number:
**WO 2018/029740 (15.02.2018 Gazette 2018/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Pioneer Corporation**
**Tokyo 113-0021 (JP)**

(72) Inventor: **CHIBA, Hironobu**
**Kawagoe-shi**
**Saitama 350-8555 (JP)**

(74) Representative: **Grünecker Patent- und**
**Rechtsanwälte**
**PartG mbB**
**Leopoldstraße 4**
**80802 München (DE)**

(54) **PLAYBACK DEVICE AND PLAYBACK METHOD**

(57)　In the present invention, for a preceding musical piece and a succeeding musical piece, an extraction unit (131, 132) extracts the signal of an audio component of each of a centrally localized region and a non-centrally localized region, from an L channel signal and an R channel signal. A reproduction control unit makes the first interval length of a first interval which is from the start of fade-out processing pertaining to the centrally localized region to the end of fade-in processing pertaining thereto shorter than the second interval length of a second interval which is from the start of fade-out processing pertaining to the non-centrally localized region to the end of fade-in processing pertaining thereto, and the reproduction control unit sets the first interval to be within the second interval. The reproduction control unit causes the fade-out processing pertaining to the non-centrally localized region to end after the fade-in processing pertaining to the non-centrally localized region has started, and causes cross-fader reproduction to be carried out. The reproduction control unit causes the fade-out processing pertaining to the centrally localized region to end after the fade-in processing pertaining to the centrally localized region has started, and causes cross-fader reproduction to be carried out.

Fig. 3

**Description**

TECHNICAL FIELD

The present invention relates to a reproduction device, to a reproduction method, to a reproduction program, and to a recording medium upon which that reproduction program is recorded.

BACKGROUND ART

From the past, reproduction devices that reproduce the contents of musical pieces have become widespread. Among reproduction devices of this type there are some reproduction devices that, in order to join a preceding musical piece that is being reproduced first to a succeeding musical piece that is to be reproduced after the preceding musical piece without any junction or seam becoming audibly conspicuous, execute cross-fade reproduction by, while performing fade-out processing in which the audio volume of the final portion of the preceding musical piece is gradually reduced, also performing fade-in processing in which the audio volume of the initial portion of the succeeding musical piece is gradually increased.

In such cross-fade reproduction of musical pieces, the final portion of the preceding musical piece and the initial portion of the succeeding musical piece are reproduced simultaneously. Due to this sometimes it may happen that, during the so-called cross-fade interval, a sense of auditory discomfort can occur because of differences in the characteristics of these portions of the musical pieces that are being reproduced simultaneously. Accordingly techniques have been proposed for suppressing the occurrence of any sense of auditory discomfort during such cross-fade reproduction.

In one such proposed technique (refer to Patent Document #1, hereinafter referred to as the "Prior Art Example"), the audio is divided up into audio components for various frequency bands, and cross-fade reproduction is performed for each audio component of each frequency band. With this technique of the Prior Art Example, in order to suppress the occurrence of any sense of auditory discomfort due to the beat pattern of the preceding musical piece and the beat pattern of the succeeding musical piece during the cross-fade interval, when performing the fade-out processing of the preceding musical piece and the fade-in processing of the succeeding musical piece, it is arranged to make the total level of the low frequency region components of the preceding musical piece and of the succeeding musical piece be smaller than the total level of the medium frequency region components of the preceding musical piece and of the succeeding musical piece, and than the total level of the high frequency region components of the preceding musical piece and of the succeeding musical piece.

PRIOR ART DOCUMENT

PATENT DOCUMENTS

Patent Document #1: Japanese Laid-Open Patent Publication 2008-27552.

SUMMARY OF THE INVENTION

PROBLEM TO BE SOLVED BY THE INVENTION

Now, let it be supposed that, for example, the preceding musical piece and the succeeding musical piece are stereo musical pieces. And let it be supposed that the preceding musical piece is a musical piece in which guitar playing is dominant, while the succeeding musical piece is a musical piece in which bass playing is dominant. In this case, the audio component relating to the centrally localized region of the preceding musical piece becomes guitar playing while the audio component relating to the centrally localized region of the succeeding musical piece becomes bass playing. And, at this time, the tonal characteristics of the centrally localized audio component of the preceding musical piece and the tonal characteristics of the centrally localized audio component of the succeeding musical piece are different. When cross-fade reproduction to which the technique of the prior art example described above is applied is performed a preceding musical piece and for a succeeding musical piece of this type, sometimes it may happen that, as the centrally localized audio component, both the guitar playing and the bass playing may be heard in the cross-fade interval, so that the musical harmony may be deteriorated. As a result, when performing cross-fade reproduction of musical pieces having a plurality of channels such as stereo musical pieces or surround-sound musical pieces or the like by employing the technique of the prior art example, there is a possibility that a sense of auditory discomfort may occur during the cross-fade interval.

Due to this, a technique is desired that, when cross-fade reproduction is performed for a musical piece having a plurality of channels, is capable of suppressing the occurrence of a sense of auditory discomfort during the cross-fade interval. To respond to this requirement is one of the problems that the present invention is intended to solve.

## MEANS FOR SOLVING THE PROBLEMS

The invention described in Claim 1 is a reproduction device that performs cross-fade reproduction of a preceding musical piece and a succeeding musical piece, comprising: an extraction unit that extracts audio components from each of the sounds of said preceding musical piece and said succeeding musical piece, corresponding to a plurality of localized regions that are determined in advance; and a cross-fade processing unit that executes cross-fade processing in which, for each of said localized regions, fade-out processing and fade-in processing are performed for a pair of corresponding audio components of said preceding musical piece and said succeeding musical piece.

Furthermore, the invention described in Claim 11 is a reproduction method employed by a reproduction device that comprises an extraction unit and a cross-fade processing unit, and that performs cross-fade reproduction of a preceding musical piece and a succeeding musical piece, comprising the steps of: an extracting step in which audio components are extracted from the sounds of each of said preceding musical piece and said succeeding musical piece, by said extraction unit corresponding to a plurality of localized regions that are determined in advance; and a cross-fade processing step of executing cross-fade processing in which, for each of said localized regions, fade-out processing and fade-in processing are performed by said cross-fade processing unit for a pair of corresponding audio components of said preceding musical piece and said succeeding musical piece.

Moreover, the invention described in Claim 12 is a reproduction program, wherein it causes a computer included in a reproduction device to execute a reproduction method according to Claim 11.

Yet further, the invention described in Claim 13 is a recording medium, wherein a reproduction program according to Claim 12 is recorded thereupon in a form that can be read by a computer in a reproduction device.

## BRIEF DESCRIPTION OF DRAWINGS

Fig. 1 is a block diagram schematically showing the configuration of a reproduction device according to the first embodiment of the present invention;

Fig. 2 is a figure for explanation of the details of musical piece contents information stored in an audio source unit of Fig. 1;

Fig. 3 is a block diagram showing the configuration of a digital processing unit of Fig. 1;

Fig. 4 is a block diagram showing the configuration of a control unit of Fig. 1;

Fig. 5 is a figure for explanation of the contents of audio recording time information stored in a storage unit of Fig. 4;

Fig. 6 is a figure for explanation of the details of cross-fade processing information stored in the storage unit of Fig. 4;

Fig. 7 is a figure for explanation of first interval processing information and second interval processing information of Fig. 6;

Fig. 8 is a figure for explanation of details of a musical piece reproduction plan;

Fig. 9 is a figure for explanation of cross-fade reproduction processing in the first embodiment;

Fig. 10 is a block diagram showing the configuration of a control unit of a reproduction device according to the second embodiment of the present invention;

Fig. 11 is a figure for explanation of the details of analysis information stored in a storage unit of Fig. 10;

Fig. 12 is a figure for explanation of details of cross-fade processing information stored in the storage unit of Fig. 10;

Fig. 13 is a figure (part 1 thereof) for explanation of cross-fade reproduction processing in the second embodiment; and

Fig. 14 is a figure (part 2 thereof) for explanation of cross-fade reproduction processing in the second embodiment.

## REFERENCE SIGNS LIST

100A, 100B: reproduction devices
131, 132: extraction units
133: cross-fade processing unit
191B: storage unit
192B: reproduction control unit (generation unit, determination unit)

EMBODIMENTS FOR CARRYING OUT THE INVENTION

Embodiments of the present invention will now be described with reference to the appended drawings. Note that, in the following explanation and drawings, the same reference symbols are appended to elements that are the same or equivalent, and duplicated explanation thereof will be omitted.

[The first embodiment]

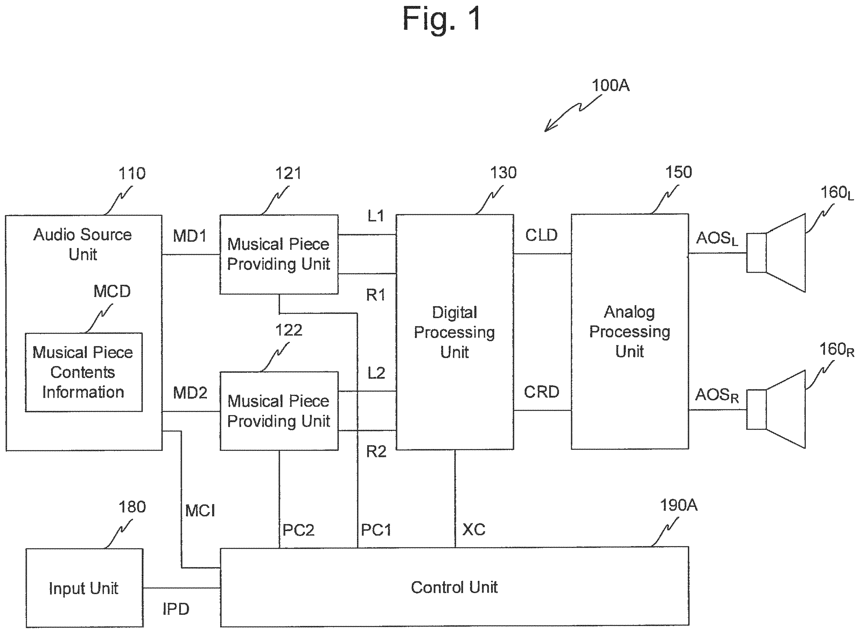

The first embodiment of the present invention will now be explained with reference to Figs. 1 through 9.

<Configuration>

The schematic configuration of a reproduction device 100A according to the first embodiment is shown as a block diagram in Fig. 1. It will be supposed that, in the first embodiment, the reproduction device 100A performs reproduction processing upon audio signals having a two-channel stereo format. And it will be supposed that, here, these audio signals in a two-channel stereo format are audio signals having a two-channel structure consisting of a left channel (hereinafter termed the "L channel") and a right channel (hereinafter termed the "R channel").

As shown in Fig. 1, the reproduction device 100A comprises an audio source unit 110, musical piece providing units 121 and 122, and a digital processing unit 130. Moreover, the reproduction device 100A comprises an analog processing unit 150, speaker units $160_L$ and $160_R$, and an input unit 180. And the reproduction device 100A comprises a control unit 190A.

The audio source unit 110 comprises a non-volatile storage element. Musical piece contents information MCD is stored in the audio source unit 110.

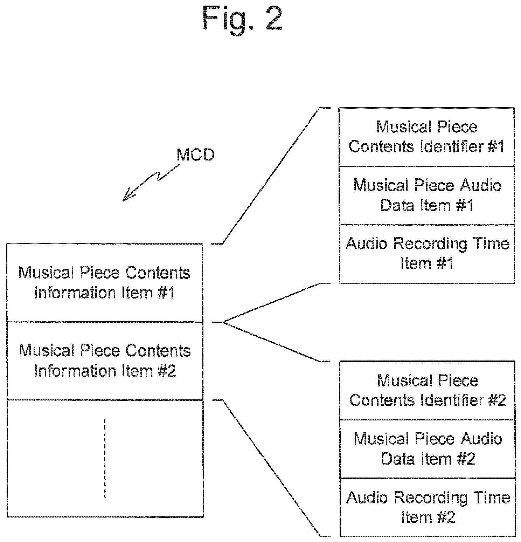

As shown in Fig. 2, musical piece contents information items #1, #2, ... #P are included in the musical piece contents information MCD. In each of these musical piece contents information items #p (where p = 1, 2, ... P), a musical piece contents identifier #p, a musical piece audio data item #p, and an audio recording time item #p are included. In the first embodiment, the reproduction device 100A is adapted to perform reproduction of the musical pieces in the following order: musical piece #1, musical piece #2, ... musical piece #P.

Returning to Fig. 1, according to a reproduction command PC1 sent from the control unit 190A, the musical piece providing unit 121 reads in from the audio source unit 110 musical piece audio data for a musical piece that has been designated, as a musical piece signal MD1. And, from this musical piece signal MD1, the musical piece providing unit 121 generates a musical piece L channel signal L1 and a musical piece R channel signal R1. The musical piece L channel signal L1 and the musical piece R channel signal R1 that have thus been generated are sent to the digital processing unit 130.

And, according to a reproduction command PC2 sent from the control unit 190A, the musical piece providing unit 122 reads in from the audio source unit 110 musical piece audio data for a musical piece that has been designated, as a musical piece signal MD2. And, from this musical piece signal MD2, the musical piece providing unit 122 generates a musical piece L channel signal L2 and a musical piece R channel signal R2. The musical piece L channel signal L2 and the musical piece R channel signal R2 that have thus been generated are sent to the digital processing unit 130.

Here, according to control by the control unit 190A, it is arranged for the musical piece providing unit 121 and the musical piece providing unit 122 to read in musical piece audio data alternatingly from the audio source unit 110, and to generate musical piece L channel signals and musical piece R channel signals. For example it may be arranged that, when the musical piece providing unit 121 has read in the musical piece audio data that is the first in reproduction order, then the musical piece providing unit 122 reads in the musical piece audio data that is the second in reproduction order, and then the musical piece providing unit 121 reads in the musical piece audio data that is the third in reproduction order, and so on.

The digital processing unit 130 receives the musical piece L channel signal L1 (hereinafter also sometimes referred to as the "signal L1") and the musical piece R channel signal R1 (hereinafter also sometimes referred to as the "signal R1") sent from the musical piece providing unit 121. Moreover, the digital processing unit 130 receives the musical piece L channel signal L2 (hereinafter also sometimes referred to as the "signal L2") and the musical piece R channel signal R2 (hereinafter also sometimes referred to as the "signal R2") sent from the musical piece providing unit 122.

And, on the basis of the signal L1, the signal R1, the signal L2, and the signal R2, the digital processing unit 130 performs cross-fade reproduction processing and so on for the musical pieces, and generates an L channel musical piece reproduction signal CLD and an R channel musical piece reproduction signal CRD. The L channel musical piece reproduction signal CLD (hereinafter also sometimes termed the "L channel reproduction signal CLD") and the R channel musical piece reproduction signal CRD (hereinafter also sometimes termed the "R channel reproduction signal CRD") that have been generated in this manner are sent to the analog processing unit 150. The details of the configuration of the digital processing unit 130 will be described hereinafter.

The analog processing unit 150 receives the L channel reproduction signal CLD and the R channel reproduction signal CRD sent from the digital processing unit 130. And the analog processing unit 150 generates an audio output signal $AOS_L$ on the basis of the L channel reproduction signal CLD and generates an audio output signal $AOS_R$ on the basis of the R channel reproduction signal CRD.

The analog processing unit 150 having the functions described above comprises a D/A (Digital to Analog) conversion unit, an audio volume adjustment unit, and a power amplification unit. Here, the D/A conversion unit receives the L channel reproduction signal CLD and the R channel reproduction signal CRD sent from the digital processing unit 130. And the D/A conversion unit converts the L channel reproduction signal CLD and the R channel reproduction signal CRD to analog signals. Note that, the D/A conversion unit comprises two D/A converters that have mutually similar configurations, corresponding to the L channel and to the R channel. The results of analog conversion by the D/A conversion unit are sent to the audio volume adjustment unit.

The audio volume adjustment unit receives the results of analog conversion of the L channel and the R channel sent from the D/A conversion unit. And the audio volume adjustment unit performs audio volume adjustment processing upon the analog conversion result signals corresponding to the L channel and to the R channel. Note that, the audio volume adjustment unit comprises two electronic volume elements having mutually similar configurations, corresponding to the L channel and to the R channel. The results of audio volume adjustment by the audio volume adjustment unit are sent to the power amplification unit.

The power amplification unit receives the audio volume adjustment result signals for the L channel and the R channel sent from the audio volume adjustment unit. And the power amplification unit amplifies the power of the audio volume adjustment result signals, and generates the audio output signal AOSL and the audio output signal $AOS_R$. The audio output signal $AOS_L$ that has been thus generated is sent to the speaker unit $160_L$. And the audio output signal $AOS_R$ that has been thus generated is sent to the speaker unit $160_R$.

The speaker unit $160_L$ receives the audio output signal $AOS_L$ sent from the analog processing unit 150. And the speaker unit $160_L$ outputs reproduction audio according to the audio output signal $AOS_L$.

Moreover, the speaker unit $160_R$ receives the audio output signal $AOS_R$ sent from the analog processing unit 150. And the speaker unit $160_R$ outputs reproduction audio according to the audio output signal $AOS_R$.

The input unit 180 comprises a key unit that is provided to a main body unit of the reproduction device 100A, or a remote input device or the like to which a key unit is provided. Here, a touch panel provided to a display unit not shown in the figures may be employed as a key unit that is provided to the main body unit. Moreover, instead of provision of a key unit, a configuration may also be employed that enables voice input. The result of input to the input unit 180 is sent to the control unit 190A as input data IPD.

Along with performing processing of various types, the control unit 190A also controls the overall operation of the reproduction device 100A. The details of the configuration of the control unit 190A will be described hereinafter.

<<Configuration of the digital processing unit 130>>

The configuration of the digital processing unit 130 will now be explained.

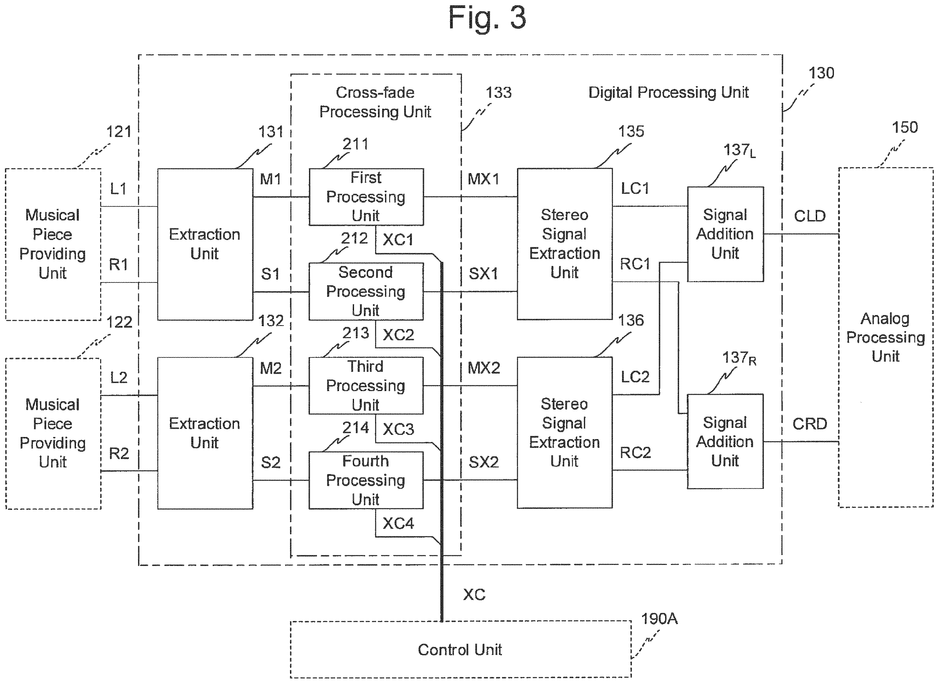

As shown in Fig. 3, the digital processing unit 130 comprises extraction units 131 and 132 and a cross-fade processing unit 133. Moreover, the digital processing unit 130 comprises stereo signal extraction units 135 and 136 and signal addition units $137_L$ and $137_R$.

The extraction unit 131 receives the signal L1 and the signal R1 sent from the musical piece providing unit 121. And, from the musical piece signal MD1, the extraction unit 131 extracts a signal M1 for the audio component relating to its centrally localized region, according to the following Equation (1). Moreover, from the musical piece signal MD1, the extraction unit 131 extracts a signal S1 for the audio component relating to its non-centrally localized regions, according to the following Equation (2).

$$M1 = (L1+R1)/2 \ldots (1)$$

$$S1 = (L1-R1)/2 \ldots (2)$$

And the extraction unit 131 sends the signal M1 and the signal S1 to the cross-fade processing unit 133.

The extraction unit 132 receives the signal L2 and the signal R2 sent from the musical piece providing unit 122. And the extraction unit 132 extracts, from the musical piece signal MD2, a signal M2 for the audio component relating to its centrally localized region, according to the following Equation (3). Moreover, the extraction unit 132 extracts, from the musical piece signal MD2, a signal S2 for the audio component relating to its non-centrally localized regions, according to the following Equation (4).

$$M2 = (L2+R2)/2 \ ... \ (3)$$

$$S2 = (L2-R2)/2 \ ... \ (4)$$

And the extraction unit 132 sends the signal M2 and the signal S2 to the cross-fade processing unit 133.

The cross-fade processing unit 133 performs cross-fade processing upon the musical piece signal MD1 and the musical piece signal MD2. The cross-fade processing unit 133 having the above function comprises a first processing unit 211, a second processing unit 212, a third processing unit 213, and a fourth processing unit 214.

The first processing unit 211 receives the signal M1 sent from the extraction unit 131. And the first processing unit 211 multiplies the signal M1 by a gain designated by a first gain command XC1 sent from the control unit 190A, and thereby generates a signal MX1. The signal MX1 that has thus been generated is sent to the stereo signal extraction unit 135.

The second processing unit 212 receives the signal S1 sent from the extraction unit 131. And the second processing unit 212 multiplies the signal S1 by a gain designated by a second gain command XC2 sent from the control unit 190A, and thereby generates a signal SX1. The signal SX1 that has thus been generated is sent to the stereo signal extraction unit 135.

The third processing unit 213 receives the signal M2 sent from the extraction unit 132. And the third processing unit 213 multiplies the signal M2 by a gain designated by a third gain command XC3 sent from the control unit 190A, and thereby generates a signal MX2. The signal MX2 that has thus been generated is sent to the stereo signal extraction unit 136.

The fourth processing unit 214 receives the signal S2 sent from the extraction unit 132. And the fourth processing unit 214 multiplies the signal S2 by a gain designated by a fourth gain command XC4 sent from the control unit 190A, and thereby generates a signal SX2. The signal SX2 that has thus been generated is sent to the stereo signal extraction unit 136.

The stereo signal extraction unit 135 receives the signal MX1 sent from the first processing unit 211. Moreover, the stereo signal extraction unit 135 receives the signal SX1 sent from the second processing unit 212. And the stereo signal extraction unit 135 extracts a signal LC1 for the L channel, according to the following Equation (5). Moreover, the stereo signal extraction unit 135 extracts a signal RC1 for the R channel, according to the following Equation (6).

$$LC1 = (MX1+SX1)/2 \ ... \ (5)$$

$$RC1 = (MX1-SX1)/2 \ ... \ (6)$$

And the stereo signal extraction unit 135 sends the signal LC1 to the signal addition unit $137_L$. Furthermore, the stereo signal extraction unit 135 sends the signal RC1 to the signal addition unit $137_R$.

The stereo signal extraction unit 136 receives the signal MX2 sent from the third processing unit 213. Moreover, the stereo signal extraction unit 136 receives the signal SX2 sent from the fourth processing unit 214. And the stereo signal extraction unit 136 extracts a signal LC2 for the L channel, according to the following Equation (7). Moreover, the stereo signal extraction unit 136 extracts a signal RC2 for the R channel, according to the following Equation (8).

$$LC2 = (MX2+SX2)/2 \ ... \ (7)$$

$$RC2 = (MX2-SX2)/2 \ ... \ (8)$$

And the stereo signal extraction unit 136 sends the signal LC2 to the signal addition unit $137_L$. Furthermore, the stereo signal extraction unit 136 sends the signal RC2 to the signal addition unit $137_R$.

The signal addition unit $137_L$ receives the signal LC1 sent from the stereo signal extraction unit 135. Moreover, the signal addition unit $137_L$ receives the signal LC2 sent from the stereo signal extraction unit 136. And the signal addition unit $137_L$ adds together the signal LC1 and the signal LC2 to generate an L channel musical piece reproduction signal CLD. The L channel musical piece reproduction signal CLD that has thus been generated is sent to the analog processing unit 150.

The signal addition unit $137_R$ receives the signal RC1 sent from the stereo signal extraction unit 135. Moreover, the signal addition unit $137_R$ receives the signal RC2 sent from the stereo signal extraction unit 136. And the signal addition unit $137_R$ adds together the signal RC1 and the signal RC2 to generate an R channel musical piece reproduction signal CRD. The R channel musical piece reproduction signal CRD that has thus been generated is sent to the analog processing unit 150.

<<Configuration of the control unit 190A>>

The configuration of the control unit 190A will now be explained.

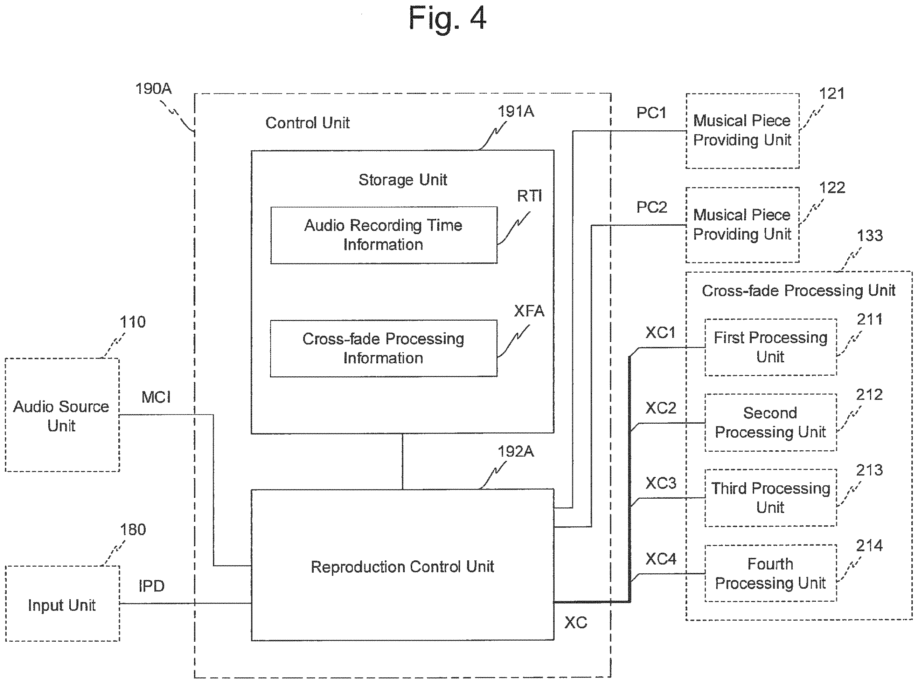

As shown in Fig. 4, the control unit 190A comprises a storage unit 191A and a reproduction control unit 192A.

The storage unit 191A includes a non-volatile storage element. In the first embodiment, audio recording time information RTI and cross-fade processing information XFA are included in the storage unit 191A.

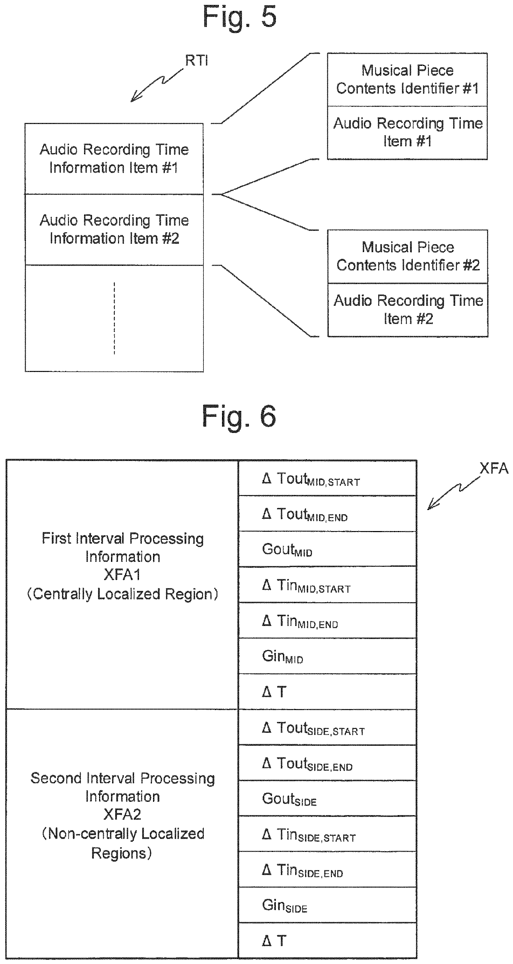

As shown in Fig. 5, the audio recording time information RTI includes audio recording time information items #p (where p = 1, 2, ... P). In each of these audio recording time information items #p (where p = 1, 2, ... P) there is included a musical piece contents identifier #p and an audio recording time item #p for the musical piece #p. The audio recording time information RTI is generated by the reproduction control unit 192A and is stored in the storage unit 191A.

As shown in Fig. 6, the cross-fade processing information XFA includes first interval processing information XFA1 and second interval processing information XFA2.

The first interval processing information XFA1 mentioned above is information, for the audio components (i.e. the signals M1 and M2) relating to the centrally localized regions, relating to processing modes for first intervals from the start of fade-out processing for the preceding musical piece until the end of fade-in processing for the succeeding musical piece (hereinafter also sometimes simply termed "first intervals"). Moreover, the second interval processing information XFA2 mentioned above is information, for the audio components (i.e. the signals S1 and S2) relating to the non-centrally localized regions, relating to processing modes for second intervals from the start of fade-out processing for the preceding musical piece until the end of fade-in processing for the succeeding musical piece (hereinafter also sometimes simply termed "second intervals").

Here, the first interval processing information XFA1 includes the following information items (a1) through (g1) relating to processing of the first interval for the audio component relating to the centrally localized regions:

(a1) $\Delta Tout_{MID,START}$: start time point information for fade-out
(b1) $\Delta Tout_{MID,END}$: end time point information for fade-out
(c1) $Gout_{MID}$: gain information for fade-out
(d1) $\Delta Tin_{MID,START}$: start time point information for fade-in
(e1) $\Delta Tin_{MID,END}$: end time point information for fade-in
(f1) $Gin_{MID}$: gain information for fade-in
(g1) $\Delta T$: (end time point $t_{PR,end}$ of preceding musical piece) - (start time point $t_{SU,start}$ of succeeding musical piece)

Moreover, the second interval processing information XFA2 includes the following information items (a2) through (g2) relating to processing of the second interval for the audio components relating to the non-centrally localized regions:

(a2) $\Delta Tout_{SIDE,START}$: start time point information for fade-out
(b2) $\Delta Tout_{SIDE,END}$: end time point information for fade-out
(c2) $Gout_{SIDE}$: gain information for fade-out
(d2) $\Delta Tin_{SIDE,START}$: start time point information for fade-in
(e2) $\Delta Tin_{SIDE,END}$: end time point information for fade-in
(f2) $Gin_{SIDE}$: gain information for fade-in
(g2) $\Delta T$: (end time point $t_{PR,end}$ of preceding musical piece) - (start time point $t_{SU,start}$ of succeeding musical piece)

In the first embodiment, the information items (a1) through (g1) and (a2) through (g2) are obtained in advance on the basis of experiment, simulation, experience, and so on. Note that, (g1) and (g2) have the same value.

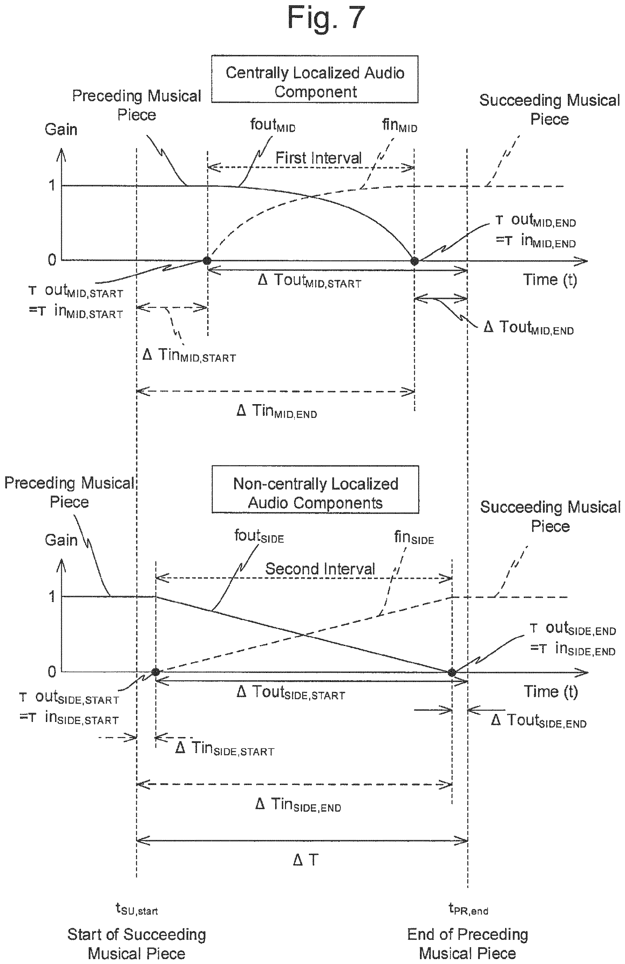

The relationship between the information items (a1) through (g1) and the information items (a2) through (g2) and the timing of the cross-fade reproduction of the musical pieces is shown in Fig. 7. Here, taking the end time point $t_{PR,end}$ of the preceding musical piece as a reference, (a1) $\Delta Tout_{MID,START}$, (b1) $\Delta Tout_{MID,END}$, (a2) $\Delta Tout_{SIDE,START}$, and (b2) $\Delta Tout_{SIDE,END}$, which are information items relating to the fade-out processing of the preceding musical piece, are information relating to time intervals back to that reference time point (refer to Fig. 7). Note that, in the first embodiment, for (b2), it is supposed that "$\Delta Tout_{SIDE,END}=0$" holds.

Moreover, taking the time point $t_{SU,start}$ of the start of the succeeding musical piece as a reference, (d1) $\Delta Tin_{MID,START}$, (e1) $\Delta Tin_{MID,END}$, (d2) $\Delta Tin_{SIDE,START}$, and (e2) $\Delta Tin_{SIDE,END}$ are information items relating to the time intervals elapsed from that time point. Note that, in the first embodiment it is supposed that, for (d2), "$\Delta Tin_{SIDE,START}=0$" holds.

Here, for the audio component relating to the centrally localized region of the preceding musical piece, the start time point for the fade-out processing is taken as being the time point $\tau out_{MID,START}$, and the end time point for the fade-out processing is taken as being the time point $\tau out_{MID,END}$. Moreover, for the audio component relating to the centrally localized region of the succeeding musical piece, the start time point for the fade-in processing is taken as being the time point $\tau in_{MID,START}$, and the end time point for the fade-in processing is taken as being the time point $\tau in_{MID,END}$.

In this case, the gain $Gout_{MID}$ applied to the fade-out processing for the audio component relating to the centrally localized region of the preceding musical piece is given by the following Equation (9):

$$Gout_{MID} = fout_{MID}(t - \tau out_{MID,START})$$

$$(\tau out_{MID,START} \leq t \leq \tau out_{MID,END}) \dots (9)$$

Here, $fout_{MID}(t - \tau out_{MID,START})$ is a function that is determined in advance, with $fout_{MID}(0)=1$ and $fout_{MID}(\tau out_{MID,END} - \tau out_{MID,START})=0$.

Moreover, the gain $Gin_{MID}$ applied to the fade-in processing for the audio component relating to the centrally localized region of the succeeding musical piece is given by the following Equation (10):

$$Gin_{MID} = fin_{MID}(t - \tau in_{MID,START})$$

$$(\tau in_{MID,START} \leq t \leq \tau in_{MID,END}) \dots (10)$$

Here, $fin_{MID}(t - \tau in_{MID,start})$ is a function that is determined in advance, with $fin_{MID}(0)=0$ and $fin_{MID}(\tau in_{MID,END} - \tau in_{MID,START})=1$.

Moreover, for the audio components relating to the non-centrally localized regions of the preceding musical piece, the start time point for the fade-out processing is taken as being the time point $\tau out_{SIDE,START}$, and the end time point for the fade-out processing is taken as being the time point $\tau out_{SIDE,END}$. Furthermore, for the audio components relating to the non-centrally localized regions of the succeeding musical piece, the start time point for the fade-in processing is taken as being the time point $\tau in_{SIDE,START}$, and the end time point for the fade-in processing is taken as being the time point $\tau in_{SIDE,END}$.

In this case, the gain $Gout_{SIDE}$ applied to the fade-out processing for the audio components relating to the non-centrally localized regions of the preceding musical piece is given by the following Equation (11):

$$Gout_{SIDE} = fout_{SIDE}(t - \tau out_{SIDE,START})$$

$$(\tau out_{SIDE,START} \leq t \leq \tau out_{SIDE,END}) \dots (11)$$

Here, $fout_{SIDE}(t - \tau out_{SIDE,START})$ is a function that is determined in advance, with $fout_{SIDE}(0)=1$ and $fout_{SIDE}(\tau out_{SIDE,END} - \tau out_{SIDE,START})=0$.

Moreover, the gain $Gin_{SIDE}$ applied to the fade-in processing for the audio components relating to the non-centrally localized regions of the succeeding musical piece is given by the following Equation (12):

$$Gin_{SIDE} = fin_{SIDE}(t - \tau in_{SIDE,START})$$

$$(\tau in_{SIDE,START} \leq t \leq \tau in_{SIDE,END}) \dots (12)$$

Here, $fin_{SIDE}(t - \tau in_{SIDE,START})$ is a function that is determined in advance, with $fin_{SIDE}(0)=0$ and $fin_{SIDE}(\tau in_{SIDE,END} - \tau in_{SIDE,START})=1$

Note that, the gain $fout_{MID}(t - \tau out_{MID,START})$, the gain $fin_{MID}(t - \tau in_{MID,START})$, the gain $fout_{SIDE}(t - \tau out_{SIDE,START})$ and the gain $fin_{SIDE}(t - \tau in_{SIDE,START})$ employed in the first embodiment are shown in Fig. 7.

Here, as shown in Fig. 7, in the first embodiment, the interval length of the first interval is set to be shorter than the interval length of the second interval, and moreover it is ensured that the first interval is received wholly within the second interval. Moreover, it is arranged for the fade-out processing relating to the non-centrally localized regions to end after the start of the fade-in processing relating to the non-centrally processed regions. In other words, it is arranged for cross-fade reproduction to be performed for the audio components relating to the non-centrally localized regions.

Furthermore, in the first embodiment, it is arranged for the fade-out processing relating to the centrally localized regions to end after the start of the fade-in processing relating to the centrally processed regions. In other words, it is arranged for cross-fade reproduction also to be performed for the audio components relating to the centrally localized regions.

Returning to Fig. 4, the reproduction control unit 192A serves the function of a timer, and controls reproduction of the contents of the musical pieces.

Before reproducing the contents of the musical pieces, the reproduction control unit 192A having the above described function first accesses the audio source unit 110, and acquires the musical piece contents identifiers #p and the audio recording time items #p included in the musical piece contents information MCI. Next, the reproduction control unit 192A creates audio recording time information RTI on the basis of these musical piece contents identifiers #p and these audio recording time items #p that have been acquired. And next the reproduction control unit 192A stores this audio recording time information RTI in the storage unit 191A.

Subsequently, on the basis of the audio recording time information RTI and the cross-fade processing information XFA, the reproduction control unit 192A creates a musical piece reproduction plan for the musical piece contents, and stores this plan internally. The details of the processing for creation of this musical piece reproduction plan by the reproduction control unit 192A will be described hereinafter.

Furthermore, the reproduction control unit 192A receives the input data IPD sent from the input unit 180. When the contents of this input data IPD is a specification for reproduction of the contents of musical pieces, then the reproduction control unit 192A generates a reproduction command PC1 according to the musical piece reproduction plan and sends this command to the musical piece providing unit 121, and also generates a reproduction command PC2 and sends it to the musical piece providing unit 122.

Moreover, the reproduction control unit 192A generates gain commands XC and sends them to the cross-fade processing unit 133, and performs reproduction control of the musical piece contents. During this reproduction control, the reproduction control unit 192A performs control for fade-out processing for the preceding musical piece, which is the musical piece that is to be reproduced first, and then performs control for fade-in processing for the succeeding musical piece, which is the musical piece that is to be reproduced next. Here, the gain commands XC include a first gain command XC1, a second gain command XC2, a third gain command XC3, and a fourth gain command XC4.

In the first embodiment, during control for cross-fade reproduction of the musical piece contents, it is arranged for the reproduction control unit 192A to perform control for fade-out processing for the preceding musical piece and to perform control for fade-in processing for the succeeding musical piece, for the audio components relating to the centrally localized region and also for the audio components relating to the non-centrally localized region.

During the above control, when the centrally localized signal for the preceding musical piece is M1, the non-centrally localized signal for the preceding musical piece is S1, the centrally localized signal for the succeeding musical piece is M2, and the non-centrally localized signal for the succeeding musical piece is S2, then the reproduction control unit 192A performs control for performing fade-out processing upon the signals M1 and S1, and performs control for performing fade-in processing upon the signals M2 and S2. In other words, the reproduction control unit 192A generates the first gain command XC1 for performing fade-out processing upon the signal M1 relating to the centrally localized region of the preceding musical piece and sends the first gain command to the first processing unit 211, and generates the third gain command XC3 for performing fade-in processing upon the signal M2 relating to the centrally localized region of the succeeding musical piece and sends the third gain command to the third processing unit 213 (this is control of the first interval for the audio signals relating to the centrally localized regions).

Moreover, in this case, the reproduction control unit 192A generates the second gain command XC2 for performing fade-out processing upon the signal S1 relating to the non-centrally localized regions of the preceding musical piece and sends the second gain command to the second processing unit 212, and generates the fourth gain command XC4 for performing fade-in processing upon the signal S2 relating to the non-centrally localized regions of the succeeding musical piece and sends the fourth gain command to the fourth processing unit 214 (this is control of the second interval for the audio signals relating to the non-centrally localized regions).

On the other hand, when the centrally localized signal for the preceding musical piece is the signal M2, the non-centrally localized signal for the preceding musical piece is the signal S2, the centrally localized signal for the succeeding musical piece is the signal M1, and the non-centrally localized signal for the succeeding musical piece is the signal S1, then the reproduction control unit 192A performs control for performing fade-out processing upon the signals M2 and S2, and performs control for performing fade-in processing upon the signals M1 and S1. In other words, the reproduction control unit 192A generates the third gain command XC3 for performing fade-out processing upon the signal M2 relating to the centrally localized region of the preceding musical piece and sends the third gain command to the third processing unit 213, and generates the first gain command XC1 for performing fade-in processing upon the signal M1 relating to the centrally localized region of the succeeding musical piece and sends the first gain command to the first processing unit 211 (this is control of the first interval for the audio signals relating to the centrally localized regions).

Moreover, in this case, the reproduction control unit 192A generates the fourth gain command XC4 for performing fade-out processing upon the signal S2 relating to the non-centrally localized regions of the preceding musical piece and sends the fourth gain command to the fourth processing unit 214, and generates the second gain command XC2 for performing fade-in processing upon the signal S1 relating to the non-centrally localized regions of the succeeding musical piece and sends the second gain command to the second processing unit 212 (this is control of the second interval for the audio signals relating to the non-centrally localized regions).

The details of the reproduction control procedure performed by the reproduction control unit 192A will be described hereinafter.

<Operation>

The operation of the reproduction device 100A having the configuration described above will now be explained, with principal emphasis being given to the processing for the cross-fade reproduction of musical pieces.

In the following explanation it will be supposed that the preceding musical piece is the musical piece #1 and the succeeding musical piece is the musical piece #2, and the explanation will concentrate upon the control for cross-fade reproduction between the musical piece #1 and the musical piece #2.

<<Processing for creation of a musical piece reproduction plan>>

First, the processing by the reproduction control unit 192A for creating a musical piece reproduction plan for the contents of the musical pieces will be explained. This processing for creating the musical piece reproduction plan is performed before reproduction of the contents of the musical pieces.

When creating the musical piece reproduction plan for the contents of the musical pieces, first the reproduction control unit 192A accesses the audio source unit 110, and acquires the musical piece contents identifiers #p and the audio recording time items #p included in the musical piece contents information MCI. And next, upon the basis of the musical piece contents identifiers #p and the audio recording time items #p, the reproduction control unit 192A creates audio recording time information RTI and stores it in the storage unit 191A.

Next, the reproduction control unit 192A acquires the time interval information $\Delta \text{Tout}_{MID,START}$, $\Delta \text{Tout}_{MID,END}$, $\Delta \text{Tin}_{MID,start}$, and $\Delta \text{Tin}_{MID,END}$ of the first interval processing information XFA1 in the cross-fade processing information XFA, and acquires the time interval information $\Delta \text{Tout}_{SIDE,START}$, $\Delta \text{Tout}_{SIDE,END}$ (=0), $\Delta \text{Tin}_{SIDE,start}$ (=0), and $\Delta \text{Tin}_{SIDE,END}$ of the second interval processing information XFA2 in the cross-fade processing information XFA. Subsequently, on the basis of this time interval information that has thus been acquired and the audio recording time information RTI, the reproduction control unit 192A creates a musical piece reproduction plan in which the reproduction start time point of the musical piece #1 is taken as being "0".

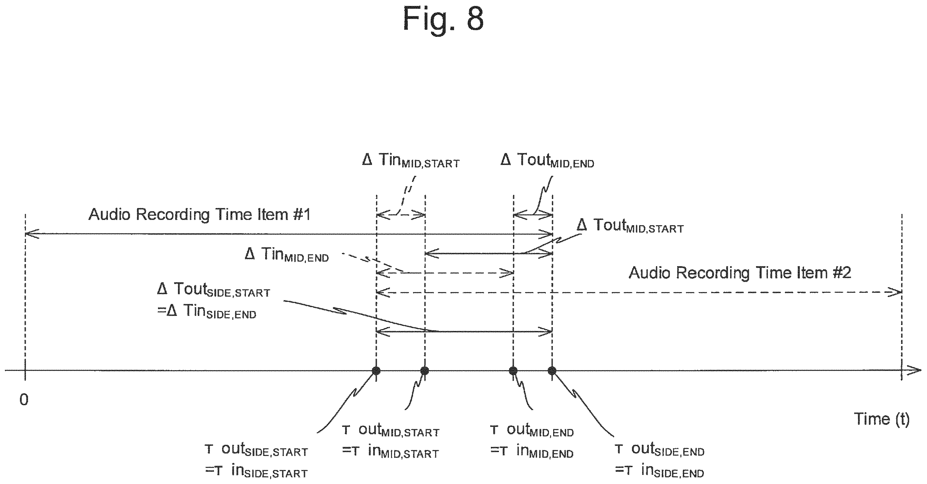

The details of a musical piece reproduction plan when the preceding musical piece is the musical piece #1 and the succeeding musical piece is the musical piece #2 are shown in Fig. 8. In the first embodiment, the time point "$\tau \text{out}_{SIDE,START} = \tau \text{in}_{SIDE,START}$" has a value obtained by subtracting "$\Delta \text{Tout}_{SIDE,START}$" from the audio recording time item #1. Moreover, the time point "$\tau \text{out}_{MID,START} = \tau \text{in}_{MID,START}$" has a value obtained by subtracting "$\Delta \text{Tout}_{MID,START}$" from the audio recording time item #1. And the time point "$\tau \text{out}_{MID,END} = \tau \text{in}_{MID,END}$" has a value obtained by subtracting "$\Delta \text{Tout}_{MID,END}$" from the audio recording time item #1. Furthermore, the time point "$\tau \text{out}_{SIDE,END} = \tau \text{in}_{SIDE,END}$" has a value obtained by subtracting "$\Delta \text{Tout}_{SIDE,END}$ (=0)" from the audio recording time item #1.

<<Cross-fade reproduction processing for the musical piece contents>>

Next, the musical piece reproduction processing of the musical piece contents by the reproduction device 100A will be explained.

For the musical piece reproduction processing of the musical piece contents by the reproduction device 100A, a reproduction command for the musical piece contents is inputted to the input unit 180, and the reproduction control unit 192A starts operation upon receipt of input data IPD whose contents are that reproduction command.

Upon receipt of this input data IPD, according to the musical piece reproduction plan, the reproduction control unit 192A generates a reproduction command PC1 in which the musical piece #1 is specified, and sends the reproduction command to the musical piece providing unit 121 (at the time point t=0).

In the following explanation, taking the time point when the reproduction command PC1 is sent to the musical piece providing unit 121 as being the time point "0", the reproduction processing of the musical piece contents by the reproduction control unit 192A subsequent to the time point t=0 will be explained in order for the successive time points. In more detail, in the following, the cross-fade processing for the musical piece contents will be explained in order with reference to the time points t="0", "$\tau\text{out}_{SIDE,START}=\tau\text{in}_{SIDE,START}$", "$\tau\text{out}_{MID,START}=\tau\text{in}_{MID,START}$", "$\tau\text{out}_{MID,END}=\tau\text{in}_{MID,END}$", and "$\tau\text{out}_{SIDE,END}=\tau\text{in}_{SIDE,END}$" (refer to Fig. 8).

Moreover, at the time point t=0, the reproduction control unit 192A sends a first gain command XC1 specifying a gain of "1.0" to the first processing unit 211. And, at the time point t=0, the reproduction control unit 192A sends a second gain command XC2 specifying a gain of "1.0" to the second processing unit 212.

Upon receipt of the above reproduction command PC1, the musical piece providing unit 121 reads in the musical piece audio data item #1 from the audio source unit 110 as the musical piece signal MD1, and creates a signal L1 and a signal R1 on the basis of this musical piece signal MD1. And the musical piece providing unit 121 sends the signal L1 and the signal R1 that it has thus created to the digital processing unit 130.

In the digital processing unit 130, the extraction unit 131 extracts the signal M1 from the signal L1 and the signal R1 according to Equation (1), and extracts the signal S1 from the signal L1 and the signal R1 according to Equation (2). And the extraction unit 131 sends the signal M1 to the first processing unit 211 and sends the signal S1 to the second processing unit 212.

Upon receipt of the signal M1, the first processing unit 211 takes the signal M1 as being the signal MX1 according to the first gain command XC1 (gain "1.0"), and sends it to the stereo signal extraction unit 135. Moreover, upon receipt of the signal S1, the second processing unit 212 takes the signal S1 as being the signal SX1 according to the second gain command XC2 (gain "1.0"), and sends it to the stereo signal extraction unit 135.

Upon receipt of the signal MX1 and the signal SX1, the stereo signal extraction unit 135 extracts the signal LC1 for the L channel (= the signal L1) according to Equation (5), and extracts the signal RC1 for the R channel (= the signal R1) according to Equation (6). And the stereo signal extraction unit 135 sends the signal LC1 to the signal addition unit 137$_L$ and sends the signal RC1 to the signal addition unit 137$_R$.

The signal addition unit 137$_L$ takes the signal LC1 sent from the stereo signal extraction unit 135 as being the L channel musical piece reproduction signal CLD, and sends it to the analog processing unit 150. Moreover, the signal addition unit 137$_R$ takes the signal RC1 sent from the stereo signal extraction unit 135 as being the R channel musical piece reproduction signal CRD, and sends it to the analog processing unit 150.

In the analog processing unit 150, processing is performed in sequence by the D/A conversion unit, the audio volume adjustment unit, and the power amplification unit, and audio output signals AOS$_L$ and AOS$_R$ are created from the L channel reproduction signal CLD and the R channel reproduction signal CRD and are sent to the speaker units 160$_L$ and 160$_R$ (refer to Fig. 1.) And the speaker units 160$_L$ and 160$_R$ reproduce audio output according to the audio output signals AOS$_L$ and AOS$_R$ sent to them from the analog processing unit 150.

(The start of processing of the second interval for the non-centrally localized audio components)

Thereafter, when the time point "$\tau\text{out}_{SIDE,START}=\tau\text{in}_{SIDE,START}$" arrives (refer to Fig. 8), according to the musical piece reproduction plan, the reproduction control unit 192A generates a reproduction command PC2 that designates the musical piece #2, and sends the command to the musical piece providing unit 122. And, upon receipt of the reproduction command PC2, the musical piece providing unit 122 reads in the musical piece audio data #2 from the audio source unit 110 as the musical piece signal MD2, and generates the signal L2 and the signal R2 on the basis of this musical piece signal MD2. And the musical piece providing unit 122 sends the signal L2 and the signal R2 that it has thus generated to the digital processing unit 130.

In the digital processing unit 130, the extraction unit 132 extracts the signal M2 from the signal L2 and the signal R2 according to Equation (3), and extracts the signal S2 from the signal L2 and the signal R2 according to Equation (4). And the extraction unit 132 sends the signal M2 to the third processing unit 213, and sends the signal S2 to the fourth processing unit 214.

Moreover, when the time point "$\tau\text{out}_{SIDE,START}=\tau\text{in}_{SIDE,START}$" arrives, in order to start the fade-out processing for the signal S1 relating to the non-centrally localized regions of the preceding musical piece (i.e. of the musical piece #1), the reproduction control unit 192A refers to the cross-fade processing information XFA and generates a second gain command XC2 that specifies the gain fout$_{SIDE}$ (refer to Equation (11)), and sends the command to the second processing unit 212. Moreover, when the time point "$\tau\text{out}_{SIDE,START}=\tau\text{in}_{SIDE,START}$" arrives, in order to start the fade-in processing for the signal S2 relating to the non-centrally localized regions of the succeeding musical piece (i.e. of the musical piece #2), the reproduction control unit 192A generates a fourth gain command XC4 that specifies the gain fin$_{SIDE}$ (refer to Equation (12)), and sends the command to the fourth processing unit 214.

Moreover, at this time, the reproduction control unit 192A sends a first gain command XC1 specifying a gain of "1.0" to the first processing unit 211, and sends a third gain command XC3 specifying a gain of "0" to the third processing unit 213.

At this time, for the centrally localized audio components, the first processing unit 211 takes the signal M1 as being the signal MX1, and sends it to the stereo signal extraction unit 135. Moreover, the third processing unit 213 sends a signal MX2 obtained by multiplying the signal M2 by the gain "0", i.e. a null audio signal, to the stereo signal extraction unit 136.

On the other hand, for the non-centrally localized audio components, the second processing unit 212 sends a signal SX1 obtained by multiplying the signal S1 by the gain $fout_{SIDE}$ to the stereo signal extraction unit 135. Moreover, the fourth processing unit 214 sends a signal SX2 obtained by multiplying the signal S2 by the gain $fin_{SIDE}$ to the stereo signal extraction unit 136.

The stereo signal extraction unit 135 extracts the signal LC1 for the L channel and the signal RC1 for the R channel from the signal MX1 (= the signal M1) and the signal SX1 (= the signal $S1 \times fout_{SIDE}$). And the stereo signal extraction unit 135 sends the signal LC1 to the signal addition unit $137_L$, and sends the signal RC1 to the signal addition unit $137_R$.

Moreover, the stereo signal extraction unit 136 extracts the signal LC2 for the L channel and the signal RC2 for the R channel from the signal SX2 (= the signal $S2 \times fin_{SIDE}$). And the stereo signal extraction unit 136 sends the signal LC2 to the signal addition unit $137_L$, and sends the signal RC2 to the signal addition unit $137_R$.

The signal addition unit $137_L$ adds together the signal LC1 sent from the stereo signal extraction unit 135 and the signal LC2 sent from the stereo signal extraction unit 136 to generate an L channel musical piece reproduction signal CLD, and sends the signal CLD to the analog processing unit 150. Moreover, the signal addition unit $137_R$ adds together the signal RC1 sent from the stereo signal extraction unit 135 and the signal RC2 sent from the stereo signal extraction unit 136 to generate an R channel musical piece reproduction signal CRD, and sends the signal CRD to the analog processing unit 150.

Subsequently, audio output signals $AOS_L$ and $AOS_R$ are generated by the analog processing unit 150. And the speaker units $160_L$ and $160_R$ reproduce audio outputs according to these audio output signals $AOS_L$ and $AOS_R$.

(The start of processing of the first interval for the centrally localized audio components)

Thereafter, when the time point "$\tau out_{MID,START}=\tau in_{MID,START}$" arrives (refer to Fig. 8), in order to start the fade-out processing for the signal M1 relating to the centrally localized region of the preceding musical piece (i.e. of the musical piece #1), the reproduction control unit 192A refers to the cross-fade processing information XFA and generates a first gain command XC1 that specifies the gain $fout_{MID}$ (refer to Equation (9)), and sends the command to the first processing unit 211. Moreover, when the time point "$\tau out_{SIDE,START}=\tau in_{SIDE,START}$" arrives, in order to start the fade-in processing for the signal M2 relating to the centrally localized region of the succeeding musical piece (i.e. of the musical piece #2), the reproduction control unit 192A generates a third gain command XC3 that specifies the gain $fin_{MID}$ (refer to Equation (10)), and sends the command to the third processing unit 213.

Moreover, at this time, the reproduction control unit 192A sends a second gain command XC2 specifying the gain $fout_{SIDE}$ to the second processing unit 212, and sends a fourth gain command XC4 specifying the gain $fin_{SIDE}$ to the fourth processing unit 214.

For the centrally localized audio component, the first processing unit 211 sends a signal MX1 obtained by multiplying the signal M1 by the gain $fout_{MID}$ to the stereo signal extraction unit 135. Moreover, upon receipt of the signal M2, the third processing unit 213 sends a signal MX2 obtained by multiplying the signal M2 by the gain $fin_{MID}$ to the stereo signal extraction unit 136.

On the other hand, for the non-centrally localized audio components, the second processing unit 212 sends a signal SX1 obtained by multiplying the signal S1 by the gain $fout_{SIDE}$ to the stereo signal extraction unit 135. Moreover, the fourth processing unit 214 sends a signal SX2 obtained by multiplying the signal S2 by the gain $fin_{SIDE}$ to the stereo signal extraction unit 136.

The stereo signal extraction unit 135 extracts the signal LC1 for the L channel and the signal RC1 for the R channel from the signal MX1 (= the signal $M1 \times fout_{MID}$) and the signal SX1 (= the signal $S1 \times fout_{SIDE}$). And the stereo signal extraction unit 135 sends the signal LC1 to the signal addition unit $137_L$, and sends the signal RC1 to the signal addition unit $137_R$.

Moreover, the stereo signal extraction unit 136 extracts the signal LC2 for the L channel and the signal RC2 for the R channel from the signal MX2 (= the signal $M2 \times fin_{MID}$) and the signal SX2 (= the signal $S2 \times fin_{SIDE}$). And the stereo signal extraction unit 136 sends the signal LC2 to the signal addition unit $137_L$, and sends the signal RC2 to the signal addition unit $137_R$.

The signal addition unit $137_L$ adds together the signal LC1 sent from the stereo signal extraction unit 135 and the signal LC2 sent from the stereo signal extraction unit 136 to generate an L channel musical piece reproduction signal CLD, and sends the signal CLD to the analog processing unit 150. Moreover, the signal addition unit $137_R$ adds together the signal RC1 sent from the stereo signal extraction unit 135 and the signal RC2 sent from the stereo signal extraction unit 136 to generate an R channel musical piece reproduction signal CRD, and sends the signal CRD to the analog processing unit 150.

Subsequently, audio output signals $AOS_L$ and $AOS_R$ are generated by the analog processing unit 150. And the speaker units $160_L$ and $160_R$ reproduce audio outputs according to these audio output signals $AOS_L$ and $AOS_R$.

(The end of processing of the first interval for the centrally localized audio components)

Thereafter, when the time point "$\tau out_{MID,END}=\tau in_{MID,END}$" arrives (refer to Fig. 8), in order to end the fade-out processing for the signal M1 relating to the centrally localized region of the preceding musical piece (i.e. of the musical piece #1), the reproduction control unit 192A generates a first gain command XC1 that specifies the gain "0", and sends the command to the first processing unit 211. Moreover, when the time point "$\tau out_{MID,END}=\tau in_{MID,END}$" arrives, in order to end the fade-in processing for the signal M2 relating to the centrally localized region of the succeeding musical piece (i.e. of the musical piece #2), the reproduction control unit 192A generates a third gain command XC3 that specifies the gain "1.0", and sends the command to the third processing unit 213.

Moreover, at this time, the reproduction control unit 192A sends a second gain command XC2 specifying the gain as $fout_{SIDE}$ to the second processing unit 212, and sends a fourth gain command XC4 specifying the gain as $fin_{SIDE}$ to the fourth processing unit 214.

For the centrally localized audio component, the first processing unit 211 sends a signal MX1 obtained by multiplying the signal M1 by the gain "0" (i.e. a null audio signal) to the stereo signal extraction unit 135. Moreover, upon receipt of the signal M2, the third processing unit 213 employs the signal M2 as the signal MX2, and send it to the stereo signal extraction unit 136.

On the other hand, for the non-centrally localized audio components, the second processing unit 212 sends a signal SX1 obtained by multiplying the signal S1 by the gain $fout_{SIDE}$ to the stereo signal extraction unit 135. Moreover, upon receipt of the signal S2, the fourth processing unit 214 sends a signal SX2 obtained by multiplying the signal S2 by the gain $fin_{SIDE}$ to the stereo signal extraction unit 136.

The stereo signal extraction unit 135 extracts the signal LC1 for the L channel and the signal RC1 for the R channel from the signal SX1 (= the signal S1 $\times$ $fout_{SIDE}$). And the stereo signal extraction unit 135 sends the signal LC1 to the signal addition unit $137_L$, and sends the signal RC1 to the signal addition unit $137_R$.

Moreover, the stereo signal extraction unit 136 extracts the signal LC2 for the L channel and the signal RC2 for the R channel from the signal MX2 (= the signal M2) and the signal SX2 (= the signal S2 $\times$ $fin_{SIDE}$). And the stereo signal extraction unit 136 sends the signal LC2 to the signal addition unit $137_L$, and sends the signal RC2 to the signal addition unit $137_R$.

The signal addition unit $137_L$ adds together the signal LC1 sent from the stereo signal extraction unit 135 and the signal LC2 sent from the stereo signal extraction unit 136 to generate an L channel musical piece reproduction signal CLD, and sends the signal CLD to the analog processing unit 150. Moreover, the signal addition unit $137_R$ adds together the signal RC1 sent from the stereo signal extraction unit 135 and the signal RC2 sent from the stereo signal extraction unit 136 to generate an R channel musical piece reproduction signal CRD, and sends the signal CRD to the analog processing unit 150.

Subsequently, audio output signals $AOS_L$ and $AOS_R$ are generated by the analog processing unit 150. And the speaker units $160_L$ and $160_R$ reproduce audio outputs according to these audio output signals $AOS_L$ and $AOS_R$.

(The end of processing of the second interval for the non-centrally localized audio components)

Thereafter, when the time point "$\tau out_{SIDE,END}=\tau in_{SIDE,END}$" arrives (refer to Fig. 8), the reproduction control unit 192A ends the fade-out processing for the signal S1 relating to the non-centrally localized regions of the preceding musical piece (i.e. of the musical piece #1). Moreover, when the time point "$\tau out_{SIDE,END}=\tau in_{SIDE,END}$" arrives, in order to end the fade-in processing for the signal S2 relating to the non-centrally localized regions of the succeeding musical piece (i.e. of the musical piece #2), the reproduction control unit 192A generates a fourth gain command XC4 that specifies the gain "1.0", and sends the command to the fourth processing unit 214.

Moreover, at this time, the reproduction control unit 192A sends a third gain command XC3 specifying the gain as "1.0" to the third processing unit 213.

For the centrally localized audio component, the third processing unit 213 employs the signal M2 as the signal MX2, and sends it to the stereo signal extraction unit 136. On the other hand, for the non-centrally localized audio components, the fourth processing unit 214 employs the signal S2 as the signal SX2, and sends it to the stereo signal extraction unit 136.

Moreover, the stereo signal extraction unit 136 extracts the signal LC2 for the L channel and the signal RC2 for the R channel from the signal MX2 (= the signal M2) and the signal SX2 (= the signal S2). And the stereo signal extraction unit 136 sends the signal LC2 to the signal addition unit $137_L$, and sends the signal RC2 to the signal addition unit $137_R$.

The signal addition unit $137_L$ takes the signal LC2 sent from the stereo signal extraction unit 136 as an L channel musical piece reproduction signal CLD, and sends the signal CLD to the analog processing unit 150. Moreover, the signal addition unit $137_R$ takes the signal RC2 sent from the stereo signal extraction unit 136 as an R channel musical piece reproduction signal CRD, and sends the signal CRD to the analog processing unit 150.

Subsequently, audio output signals $AOS_L$ and $AOS_R$ are generated by the analog processing unit 150. And the speaker units $160_L$ and $160_R$ reproduce audio outputs according to these audio output signals $AOS_L$ and $AOS_R$.

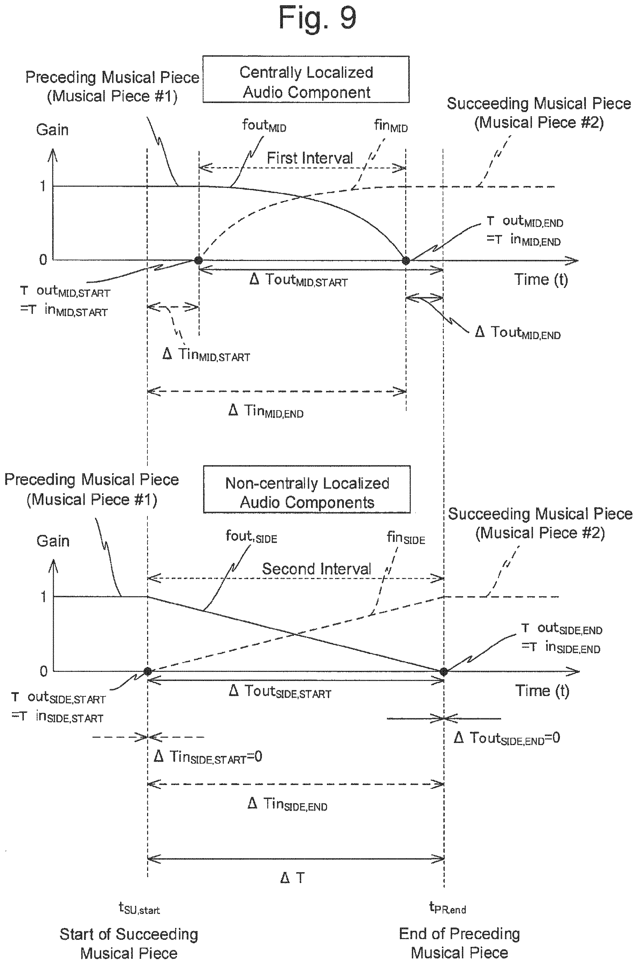

The timing of the cross-fade reproduction processing of the musical piece contents performed as described above is shown in Fig. 9.

As explained above, in the first embodiment, the musical piece providing unit 121 generates a musical piece L channel signal L1 and a musical piece R channel signal R1 from the musical piece signal MD1, and the musical piece providing unit 122 generates a musical piece L channel signal L2 and a musical piece R channel signal R2 from the musical piece signal MD2. And next, the extraction unit 131 extracts the centrally localized audio component signal M1 and the non-centrally localized audio components signal S1 from the musical piece L channel signal L1 and the musical piece R channel signal R1. Moreover, the extraction unit 132 extracts the centrally localized audio component signal M2 and the non-centrally localized audio components signal S2 from the musical piece L channel signal L2 and the musical piece R channel signal R2.

Then, when performing cross-fade reproduction of the preceding musical piece and the succeeding musical piece, under the control of the reproduction control unit 192A, the cross-fade processing unit 133 performs fade-out processing for the preceding musical piece and performs fade-in processing for the succeeding musical piece, upon each of the audio component signals (M1 and M2) relating to the centrally localized regions and each of the audio component signals (S1 and S2) relating to the non-centrally localized regions.

During this control of the fade-out processing and the fade-in processing, the reproduction control unit 192A makes the first interval length of the first interval relating to the centrally localized regions from the start of fade-out processing to the end of fade-in processing be shorter than the second interval length of the second interval relating to the non-centrally localized regions from the start of fade-out processing to the end of fade-in processing, and also ensures that the first interval is completely contained within the second interval. Moreover, during this control, it is arranged to perform cross-fade reproduction by ensuring that the fade-out processing relating to the non-centrally localized regions is ended after the start of the fade-in processing relating to the non-centrally localized regions. Furthermore, during this control, it is arranged to perform cross-fade reproduction by ensuring that the fade-out processing relating to the centrally localized regions is ended after the start of the fade-in processing relating to the centrally localized regions.

In this manner, with the first embodiment, during changeover from the preceding musical piece to the succeeding musical piece with cross-fade reproduction, the length of the changeover for the audio components relating to the centrally localized regions is made to be quicker, as compared to the length of the changeover for the audio components relating to the non-centrally localized regions.

Due to this, in the first embodiment, it is possible to suppress failure of musical harmony in the centrally localized regions.

Moreover, by making the second interval be longer than the first interval, it is possible to impart a sense of realism, due to the cross-fade reproduction for the audio components relating to the non-centrally localized regions.

Thus, according to the first embodiment, when cross-fade reproduction is performed for musical pieces having a plurality of channels, it is possible to suppress the occurrence of a sense of auditory discomfort during the cross-fade interval.

[The second embodiment]

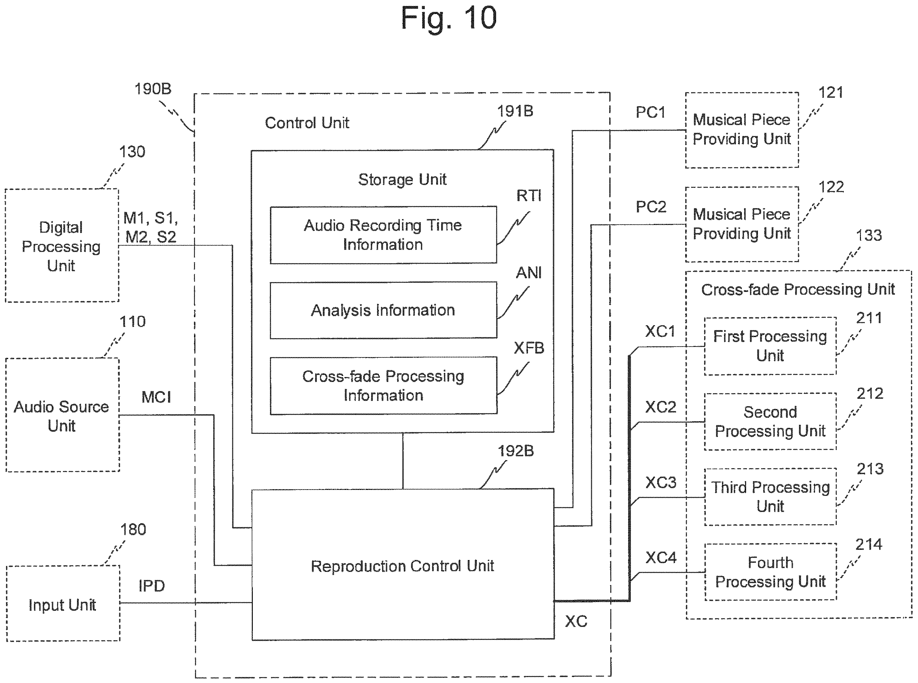

The second embodiment of the present invention will now be explained with reference to Figs. 10 through 14.

<Configuration>

In comparison to the reproduction device 100A of the first embodiment described above, the reproduction device of the second embodiment differs by the feature of being provided with a control unit 190B having the configuration shown in Fig. 10, instead of the control unit 190A. Note that, in the following explanation, the reproduction device of the second embodiment is referred to as the " reproduction device 100B".

As shown in Fig. 10, as compared to the control unit 190A described above, the control unit 190B differs by being provided with a storage unit 191B instead of the storage unit 191A, and by being provided with a reproduction control unit 192B instead of the reproduction control unit 192A.

The storage unit 191B comprises a non-volatile storage element. In the second embodiment, audio recording time information RTI, analysis information ANI, and cross-fade processing information XFB are included in the storage unit 191B.

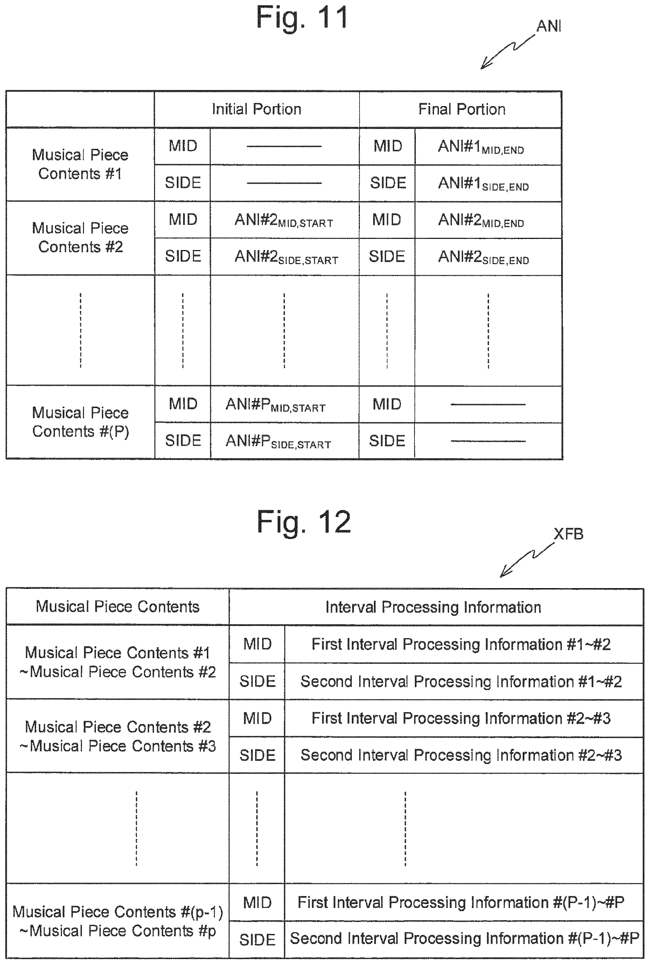

As shown in Fig. 11, for each musical piece contents #p (where p=1, 2, ... P), the analysis information ANI above includes analysis information $ANI\#p_{MID,START}$ for the audio component relating to the centrally localized region (MID) of the initial portion of the musical piece #p and analysis information $ANI\#p_{MID,END}$ for the audio component relating to the centrally localized region (MID) of the final portion of the musical piece #p. Moreover, for each musical piece contents #p (where p=1, 2, ... P), the analysis information ANI includes analysis information ANI#$p_{SIDE,START}$ for the audio components relating to the non-centrally localized regions (SIDE) of the initial portion of the musical piece #p and analysis information ANI#$p_{SIDE,END}$ for the audio components relating to the non-centrally localized regions (SIDE) of the final portion of the musical piece #p.

Note that, for the musical piece contents #1 which is the first in reproduction order, only the analysis information ANI#$1_{MID,END}$ and the analysis information ANI#$1_{SIDE,END}$ for the final portion thereof are included. Moreover, for the musical piece contents #P which is the last in reproduction order, only the analysis information ANI#$P_{MID,START}$ and the analysis information ANI#$P_{SIDE,START}$ for the initial portion thereof are included. In the second embodiment, the analysis information is tonal characteristic information that specifies the spectral envelope or the detailed spectral structure of the musical piece, or the impression given by its harmonic structure or the like, or its musical harmony. The analysis information ANI is generated by the reproduction control unit 192B and is stored in the storage unit 191B.

As shown in Fig. 12, for each musical piece contents #q~#(q+1) (where q=1, 2, ... P-1), the cross-fade processing information XFB includes first interval processing information #q~#(q+1) and second interval processing information #q~#(q+1).

Here, for the audio components relating to the centrally localized regions, the first interval processing information #q~#(q+1) is information relating to the processing mode for the first interval from the start of the fade-out processing of the musical piece #q (i.e. the preceding musical piece) to the end of the fade-in processing for the musical piece #(q+1) (i.e. the succeeding musical piece). The information items (a1) through (g1) described above are information included in the first interval processing information #q~#(q+1).

Moreover, for the audio components relating to the non-centrally localized regions, the second interval processing information #q~#(q+1) is information relating to the processing mode for the second interval from the start of fade-out processing of the musical piece #q (i.e. the preceding musical piece) to the end of the fade-in processing for the musical piece #(q+1) (i.e. the succeeding musical piece). The information items (a2) through (g2) described above are information included in the second interval processing information #q~#(q+1). The abovementioned cross-fade information XFB is determined by the reproduction control unit 192B, and is stored in the storage unit 191B.

Returning to Fig. 10, the reproduction control unit 192B generates audio recording time information RTI, in a similar manner to the reproduction control unit 192A of the first embodiment.

Furthermore, the reproduction control unit 192B generates the analysis information ANI. When generating the analysis information ANI, the reproduction control unit 192B receives from the digital processing unit 130 the signals (M1 and M2) for the audio components relating to the centrally localized regions of the initial portions of the musical piece audio data for the musical piece #1, the musical piece #2, ... the musical piece #P. And the reproduction control unit 192B analyses the tonal characteristics of these signals, and generates the set of analysis information ANI#$p_{MID,START}$. Moreover, the reproduction control unit 192B receives from the digital processing unit 130 the signals (M1 and M2) for the audio components relating to the centrally localized regions of the final portions of the musical piece audio data for the musical piece #1, the musical piece #2, ... the musical piece #P. And the reproduction control unit 192B analyses the tonal characteristics of these signals, and generates the set of analysis information ANI#$p_{MID,END}$.

Yet further, the reproduction control unit 192B receives from the digital processing unit 130 the signals (S1 and S2) for the audio components relating to the non-centrally localized regions of the initial portions of the musical piece audio data for the musical piece #1, the musical piece #2, ... the musical piece #P. And the reproduction control unit 192B analyses the tonal characteristics of these signals, and generates the analysis information ANI#$p_{SIDE,START}$. And the reproduction control unit 192B receives from the digital processing unit 130 the signals (S1 and S2) for the audio components relating to the non-centrally localized regions of the final portions of the musical piece audio data for the musical piece #1, the musical piece #2, ... the musical piece #P. And the reproduction control unit 192B analyses the tonal characteristics of these signals, and generates the analysis information ANI#$p_{SIDE,END}$.

The reproduction control unit 192B stores these sets of analysis information ANI#$p_{MID,START}$, ANI#$p_{MID,END}$, ANI#$p_{SIDE,START}$, and ANI#$p_{SIDE,END}$ in the storage unit 191B.

Furthermore, the reproduction control unit 192B generates cross-fade processing information XFB. When generating the cross-fade processing information XFB, the reproduction control unit 192B determines and generates the first interval processing information #q~#(q+1) on the basis of the analysis information ANI#$q_{MID,END}$ for the audio component relating to the centrally localized region of the final portion of the musical piece #q (i.e. the first analysis information), and on the basis of the analysis information ANI#$(q+1)_{MID,START}$ for the audio component relating to the centrally localized region of the initial portion of the musical piece #(q+1) (i.e. the second analysis information).

Moreover, the reproduction control unit 192B determines and generates second interval processing information #q~#(q+1) on the basis of the analysis information ANI#$q_{SIDE,END}$ for the audio components relating to the non-centrally localized regions of the final portion of the musical piece #q (i.e. the third analysis information), and on the basis of the analysis information ANI#$(q+1)_{SIDE,START}$ for the audio components relating to the non-centrally localized regions of the initial portion of the musical piece #(q+1) (i.e. the fourth analysis information).

When generating the above described first interval processing information #q~#(q+1) and second interval processing information #q~#(q+1), the reproduction control unit 192B compares together the analysis information ANI#q$_{MID,END}$ (i.e. the first analysis information) and the analysis information ANI#(q+1)$_{MID,START}$ (i.e. the second analysis information), and calculates a first degree of tonal similarity. Moreover, the reproduction control unit 192B compares together the analysis information ANI#q$_{SIDE,END}$ (i.e. the third analysis information) and the analysis information ANI#(q+1)$_{SIDE,START}$ (i.e. the fourth analysis information), and calculates a second degree of tonal similarity. Here, the higher is the degree of tonal similarity, the greater becomes the degree of resemblance between these two sets of analysis information that are compared.

Next, when (i) the first degree of tonal similarity is less than the first threshold value and the second degree of tonal similarity is greater than or equal to the second threshold value, then the reproduction control unit 192B generates first interval processing information #q~#(q+1) in which the interval length of the first interval is set to be shorter than the interval length of the second interval, and in which the fade-out processing relating to the centrally-localized region is ended before the start of the fade-in processing relating to the centrally-localized region. Moreover, when the first degree of tonal similarity is less than the first threshold value and the second degree of tonal similarity is greater than or equal to the second threshold value, then the reproduction control unit 192B generates second interval processing information #q~#(q+1) in which the fade-out processing relating to the non-centrally localized regions is ended after the start of the fade-in processing relating to the non-centrally localized regions.

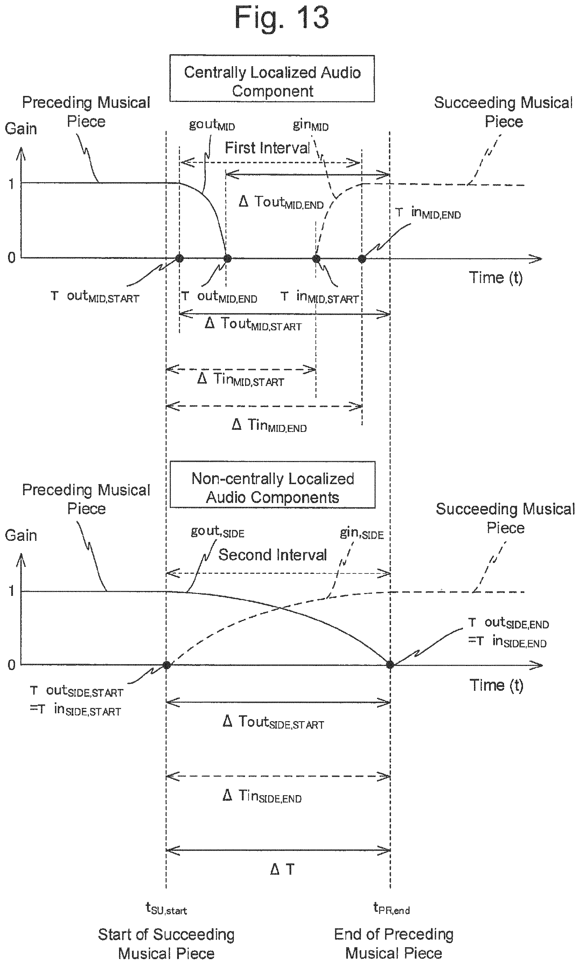

An example of the timing at which cross-fade reproduction processing for the musical pieces is executed according to the first interval processing information and the second interval processing information when condition (i) is satisfied is shown in Fig. 13. Here, the first threshold value and the second threshold value are determined in advance on the basis of experiment, simulation, experience or the like, from the standpoint of suppressing any sense of auditory discomfort that might occur when performing cross-fade reproduction for the audio components relating to the centrally localized region.

Here, the gain function gout$_{MID}$(t - $\tau$out$_{MID,START}$) shown in Fig. 13 is a function that is determined in advance, and gout$_{MID}$(0)=1 while gout$_{MID}$($\tau$out$_{MID,END}$ - $\tau$out$_{MID,START}$)=0. And gin$_{MID}$(t - $\tau$in$_{MID,START}$) is a function that is determined in advance, and gin$_{MID}$(0)=0 while gin$_{MID}$($\tau$in$_{MID,END}$ - $\tau$in$_{MID,START}$)=1. Moreover, gout$_{SIDE}$(t - $\tau$out$_{SIDE,START}$) is a function that is determined in advance, and gout$_{SIDE}$(0)=1 while gout$_{SIDE}$($\tau$out$_{SIDE,END}$ - $\tau$out$_{SIDE,START}$)=0. Yet further, gin$_{SIDE}$(t - $\tau$in$_{SIDE,START}$) is a function that is determined in advance, and gin$_{SIDE}$(0)=0 while gin$_{SIDE}$($\tau$in$_{SIDE,END}$ - $\tau$in$_{SIDE,START}$)=1.

Next, when (ii) the first degree of tonal similarity is greater than or equal to the third threshold value and the second degree of tonal similarity is less than the fourth threshold value, then the reproduction control unit 192B generates first interval processing information #q~#(q+1) in which the interval length of the first interval is set to be longer than the interval length of the second interval, and in which the fade-out processing relating to the centrally localized region is ended after the start of the fade-in processing relating to the centrally localized region. Moreover, when the first degree of tonal similarity is greater than or equal to the third threshold value and the second degree of tonal similarity is less than the fourth threshold value, then the reproduction control unit 192B generates second interval processing information #q~#(q+1) in which the fade-out processing relating to the non-centrally localized regions is ended before the start of the fade-in processing relating to the non-centrally localized regions.

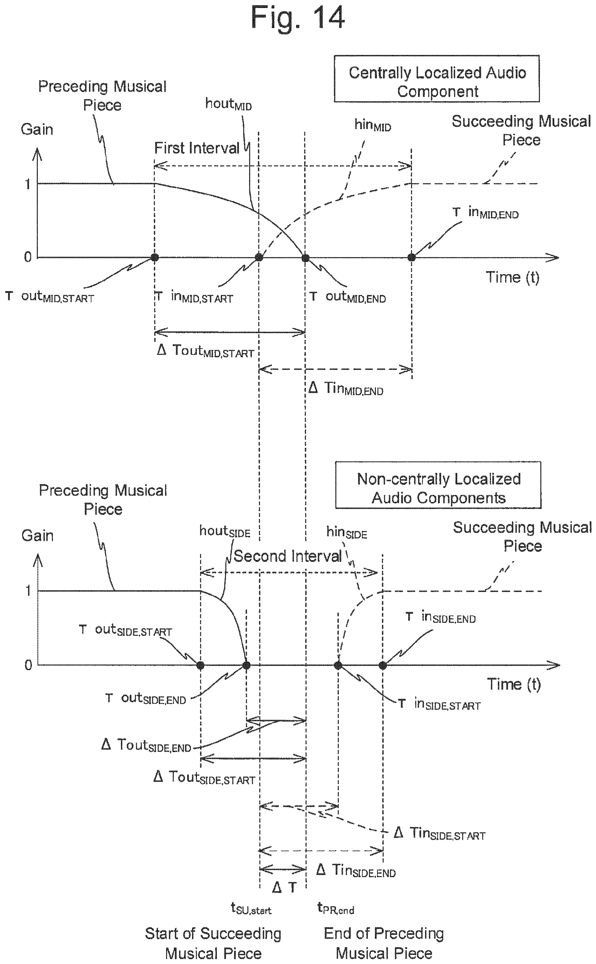

A timing at which cross-fade reproduction processing for musical pieces is executed according to first interval processing information and second interval processing information when condition (ii) is satisfied is shown in Fig. 14. Here, the third threshold value and the fourth threshold value are determined in advance on the basis of experiment, simulation, experience or the like, from the standpoint of suppressing any sense of auditory discomfort that might occur when performing cross-fade reproduction for the audio components relating to the non-centrally localized regions.

Here, the gain function hout$_{MID}$(t-$\tau$out$_{MID,START}$) shown in Fig. 14 is a function that is determined in advance, and hout$_{MID}$(0)=1 while hout$_{MID}$($\tau$out$_{MID,END}$-$\tau$out$_{MID,START}$)=0. And hin$_{MID}$(t-$\tau$in$_{MID,START}$) is a function that is determined in advance, and hin$_{MID}$(0)=0 while hin$_{MID}$($\tau$in$_{MID,END}$-$\tau$in$_{MID,START}$)=1. Moreover, hout$_{SIDE}$(t-$\tau$out$_{SIDE,START}$) is a function that is determined in advance, and hout$_{SIDE}$(0)=1 while hout$_{SIDE}$($\tau$out$_{SIDE,END}$-$\tau$out$_{SIDE,START}$)=0. Yet further, hin$_{SIDE}$(t-$\tau$in$_{SIDE,START}$) is a function that is determined in advance, and hin$_{SIDE}$(0)=0 while hin$_{SIDE}$($\tau$in$_{SIDE,END}$-$\tau$in$_{SIDE,START}$)=1.

Note that, in the second embodiment, when the first degree of tonal similarity and the second degree of tonal similarity do not satisfy condition (i) or (ii) mentioned above and also it is possible, on the basis of the first degree of tonal similarity and the second degree of tonal similarity, to arrive at the evaluation that both the centrally localized audio components and also the non-centrally localized audio components of the preceding musical piece and the succeeding musical piece resemble one another, then first interval processing information #q~#(q+1) is generated in which the interval length of the first interval is set to be shorter than the interval length of the second interval, and in which the fade-out processing relating to the centrally localized regions is ended after the start of the fade-in processing relating to the centrally localized regions. Moreover, when the condition (i) or (ii) above is not satisfied and also, on the basis of the first degree of tonal similarity and the second degree of tonal similarity, it is possible to arrive at the evaluation that both the centrally localized audio components and also the non-centrally localized audio components of the preceding musical piece and the succeeding musical piece resemble one another, then the reproduction control unit 192B generates second interval processing information #q~#(q+1) in which the fade-out processing relating to the non-centrally localized regions is ended after the start of the fade-in processing relating to the non-centrally localized regions (refer to Fig. 9 described above).

Moreover, when the first degree of tonal similarity and the second degree of tonal similarity do not satisfy condition (i) or (ii) mentioned above and also it is possible, on the basis of the first degree of tonal similarity and the second degree of tonal similarity, to arrive at the evaluation that both the centrally localized audio components and the non-centrally localized audio components of the preceding musical piece and the succeeding musical piece do not resemble one another, then it is arranged to generate first interval processing information #q~#(q+1) in which the fade-out processing relating to the centrally localized regions is ended before the start of the fade-in processing relating to the centrally localized regions, and to generate second interval processing information #q~#(q+1) in which the fade-out processing relating to the non-centrally localized regions is ended after the start of the fade-in processing relating to the non-centrally localized regions.

Moreover, the reproduction control unit 192B generates a musical piece reproduction plan for the musical piece contents on the basis of the audio recording time information RTI and the cross-fade processing information XFB, and stores this reproduction plan internally.

Furthermore, the reproduction control unit 192B receives the input data IPD sent from the input unit 180. When the contents of this input data IPD is a reproduction command for musical piece contents, then, according to the musical piece reproduction plan, the reproduction control unit 192B generates a reproduction command PC1 and sends it to the musical piece providing unit 121, and also generates a reproduction command PC2 and sends it to the musical piece providing unit 122.

Yet further, the reproduction control unit 192B generates gain commands XC and sends them to the cross-fade processing unit 133, and performs reproduction control of the musical piece contents. The details of the reproduction control procedure performed by the reproduction control unit 192B will be described hereinafter.

<Operation>

The operation of the reproduction device 100B having the configuration described above will now be explained, with principal emphasis being given to the processing for the cross-fade reproduction of musical pieces.

In the following explanation it will be supposed that the preceding musical piece is musical piece #1 and the succeeding musical piece is musical piece #2, and the explanation will concentrate upon the control for cross-fade reproduction between the musical piece #1 and the musical piece #2.

As a preliminary, it will be supposed that the reproduction control unit 192B generates musical piece audio recording information RTI, analyze processing information ANI and cross-fade processing information XFB, and stores this information in the storage unit 181B. Moreover, it will be supposed that the reproduction control unit 192B generates a musical piece reproduction plan for the musical piece contents on the basis of the audio recording time information RTI and the cross-fade processing information XFB.

Suppose that, in a situation of this type, a reproduction command for the contents of musical pieces is inputted to the input unit 180, and that the reproduction control unit 192B starts to receive input data IPD which is the contents of that reproduction command.

<<Cross-fade reproduction processing of the musical piece contents (i)>>

First, the control of cross-fade reproduction processing of the musical piece contents by the reproduction control unit 192B on the basis of first interval processing information #1~#2 and second interval processing information #1~#2 generated based upon condition (i) above will be explained (refer to Fig. 13).

Upon receipt of the input data IPD, according to the musical piece reproduction plan, the reproduction control unit 192B generates a reproduction command PC1 in which the musical piece #1 is specified, and sends the reproduction command to the musical piece providing unit 121 (at the time point t=0).

In the following explanation, the time when the reproduction control unit 192B sends the reproduction command PC1 to the musical piece providing unit 121 will be taken as the time point "0", and the control of the reproduction processing of the musical piece contents from this time point t=0 will be explained in the order that time points elapse. In other words, in the following description, the control for the cross-fade processing of the musical piece contents will be explained by referring to the time points t="0", "$\tau out_{SIDE,START}=\tau in_{SIDE,START}$", "$\tau out_{MID,START}$", "$\tau out_{MID,END}$", "$\tau in_{MID,START}$", "$\tau in_{MID,END}$", and "$\tau out_{SIDE,END}=\tau in_{SIDE,END}$" in that order (refer to Fig. 13).

Moreover, at the time point t=0, the reproduction control unit 192B sends a first gain command XC1 specifying the gain as "1.0" to the first processing unit 211. And, at the time point t=0, the reproduction control unit 192B sends a second gain command XC2 specifying the gain as "1.0" to the second processing unit 212.

Upon receipt of the reproduction command PC1, the musical piece providing unit 121 reads in the musical piece audio data #1 as the musical piece signal MD1 from the audio source unit 110, and generates a signal L1 and a signal R1. And the musical piece providing unit 121 sends the signal L1 and the signal R1 that it has thus generated to the digital processing unit 130.

In the digital processing unit 130, the extraction unit 131 extracts a signal M1 and a signal S1 from the signal L1 and the signal R1. And the extraction unit 131 sends the signal M1 to the first processing unit 211, and sends the signal S1 to the second processing unit 212.

According to the first gain command XC1 (gain "1.0"), the first processing unit 211 sends the signal M1 to the stereo signal extraction unit 135 as the signal MX1. Moreover, according to the second gain command XC2 (gain "1.0"), the second processing unit 212 sends the signal S1 to the stereo signal extraction unit 135 as the signal SX1.

Subsequently processing is performed by the stereo signal extraction unit 135, the signal addition units $137_L$ and $137_R$, and the analog processing unit 150, and the audio output signals $AOS_L$ and $AOS_R$ are generated. And the speaker units $160_L$ and $160_R$ reproduce audio output according to these audio output signals $AOS_L$ and $AOS_R$.

(Start of processing of the second interval for the non-centrally localized audio components)

Thereafter, when the time point "$\tau out_{SIDE,START}=\tau in_{SIDE,START}$" arrives (refer to Fig. 13), the reproduction control unit 192B generates a reproduction command PC2 designating the musical piece #2, and sends the command to the musical piece providing unit 122. And, upon receipt of the reproduction command PC2, the musical piece providing unit 122 reads in the musical piece audio data #2 as a musical piece signal MD2 from the audio source unit 110, and generates a signal L2 and a signal R2. And the musical piece providing unit 122 sends the signal L2 and the signal R2 that it has thus generated to the digital processing unit 130.

In the digital processing unit 130, the extraction unit 132 extracts a signal M2 and a signal S2 from the signal L2 and the signal R2. And the extraction unit 132 sends the signal M2 to the third processing unit 213, and sends the signal S2 to the fourth processing unit 212.

Furthermore, when the time point "$\tau out_{SIDE,START}=\tau in_{SIDE,START}$" arrives, in order to start the fade-out processing for the signal S1 relating to the non-centrally localized regions of the preceding musical piece (i.e. of the musical piece #1), the reproduction control unit 192B generates a second gain command XC2 that designates the gain $gout_{SIDE}$, and sends the gain command to the second processing unit 212. Furthermore, when the time point "$\tau out_{SIDE,START}=\tau in_{SIDE,START}$" arrives, the reproduction control unit 192B generates a fourth gain command XC4 that designates the gain $gin_{SIDE}$ in order to start the fade-in processing for the signal S2 relating to the non-centrally localized regions of the succeeding musical piece (i.e. of the musical piece #2), and sends the gain command to the fourth processing unit 214.

Moreover, at this time, the reproduction control unit 192B sends a first gain command XC1 specifying the gain as "1" to the first processing unit 211, and sends a third gain command XC3 specifying the gain as "0" to the third processing unit 213.

At this time, for the centrally localized audio component, the first processing unit 211 takes the signal M1 as the signal MX1, which it sends to the stereo signal extraction unit 135.

On the other hand, for the non-centrally localized audio components, the second processing unit 212 multiplies the signal S1 by the gain $gout_{SIDE}$ to obtain a signal SX1, which it sends to the stereo signal extraction unit 135. Moreover, the fourth processing unit 214 multiplies the signal S2 by the gain $gin_{SIDE}$ to obtain a signal SX2, which it sends to the stereo signal extraction unit 136. In other words, cross-fade reproduction is performed for the audio components relating to the non-centrally localized regions.

Subsequently processing is performed by the stereo signal extraction units 135 and 136, the signal addition units $137_L$ and 137R, and the analog processing unit 150, and the audio output signals AOSL and $AOS_R$ are generated. And the speaker units $160_L$ and $160_R$ reproduce audio output according to these audio output signals $AOS_L$ and $AOS_R$.

(Start of processing of the first interval for the centrally localized audio components)

Thereafter, when the time point "$\tau out_{MID,START}$" arrives (refer to Fig. 13), the reproduction control unit 192B generates a first gain command XC1 that designates the gain $gout_{MID}$ in order to start the fade-out processing for the signal M1 relating to the centrally localized region of the preceding musical piece (i.e. of the musical piece #1), and sends the gain command to the first processing unit 211.

Note that, at this time, the reproduction control unit 192B sends a second gain command XC2 that specifies the gain $gout_{SIDE}$ to the second processing unit 212.

For the centrally localized audio components, the first processing unit 211 multiplies the signal M1 by the gain $gout_{MID}$ to obtain the signal MX1, which it sends to the stereo signal extraction unit 135. On the other hand, for the non-centrally localized audio components, the second processing unit 212 multiplies the signal S1 by the gain $gout_{SIDE}$ to obtain the signal SX1, which it sends to the stereo signal extraction unit 135. Moreover, for the non-centrally localized audio components, the fourth processing unit 214 multiplies the signal S2 by the gain $gin_{SIDE}$ to obtain the signal SX2, which it sends to the stereo signal extraction unit 136.

Subsequently processing is performed by the stereo signal extraction units 135 and 136, the signal addition units $137_L$ and $137_R$, and the analog processing unit 150, and the audio output signals $AOS_L$ and $AOS_R$ are generated. And the speaker units $160_L$ and $160_R$ reproduce audio output according to these audio output signals $AOS_L$ and $AOS_R$.

(End of fade-out for the centrally localized audio component)

Thereafter, when the time point "$\tau out_{MID,END}$" arrives (refer to Fig. 13), the reproduction control unit 192B generates a first gain command XC1 that designates the gain "0" in order to end the fade-out processing for the signal M1 relating to the centrally localized region of the preceding musical piece (i.e. of the musical piece #1), and sends the gain command to the first processing unit 211.

Moreover, at this time, the reproduction control unit 192B sends a third gain command XC3 specifying the gain as "0" to the third processing unit 213. And, at this time, the reproduction control unit 192B sends a second gain command XC2 specifying the gain $gout_{SIDE}$ to the second processing unit 212, and sends a fourth gain command XC4 specifying the gain $gin_{SIDE}$ to the fourth processing unit 214.

At this time, reproduction is not performed for the audio components relating to the centrally localized regions. On the other hand, for the non-centrally localized audio components, the second processing unit 212 multiplies the signal S1 by the gain $gout_{SIDE}$ to obtain the signal SX1, which it sends to the stereo signal extraction unit 135. Moreover, the fourth processing unit 214 multiplies the signal S2 by the gain $gin_{SIDE}$ to obtain the signal SX2, which it sends to the stereo signal extraction unit 136.

Subsequently processing is performed by the stereo signal extraction units 135 and 136, the signal addition units $137_L$ and $137_R$, and the analog processing unit 150, and the audio output signals $AOS_L$ and $AOS_R$ are generated. And the speaker units $160_L$ and $160_R$ reproduce audio output according to these audio output signals $AOS_L$ and $AOS_R$.

(Start of fade-in for the centrally localized audio component)

Thereafter, when the time point "$\tau in_{MID,START}$" arrives (refer to Fig. 13), the reproduction control unit 192B generates a third gain command XC3 that designates the gain $gin_{MID}$ for starting the fade-in processing for the signal M2 relating to the centrally localized region of the succeeding musical piece (i.e. of the musical piece #2), and sends the gain command to the third processing unit 213.

Moreover, at this time, the reproduction control unit 192B sends a first gain command XC1 specifying the gain as "0" to the first processing unit 211. And, at this time, the reproduction control unit 192B sends a second gain command XC2 specifying the gain as $gout_{SIDE}$ to the second processing unit 212, and sends a fourth gain command XC4 specifying the gain as $gin_{SIDE}$ to the fourth processing unit 214.

At this time, for the centrally localized audio component, the third processing unit 213 multiplies the signal M2 by the gain $gin_{MID}$ to obtain the signal MX2, which it sends to the stereo signal extraction unit 136.

On the other hand, for the non-centrally localized audio components, the second processing unit 212 multiplies the signal S1 by the gain $gout_{SIDE}$ to obtain the signal SX1, which it sends to the stereo signal extraction unit 135. Moreover, the fourth processing unit 214 multiplies the signal S2 by the gain $gin_{SIDE}$ to obtain the signal SX2, which it sends to the stereo signal extraction unit 136.

Subsequently processing is performed by the stereo signal extraction units 135 and 136, the signal addition units $137_L$ and $137_R$, and the analog processing unit 150, and the audio output signals $AOS_L$ and $AOS_R$ are generated. And the speaker units $160_L$ and $160_R$ reproduce audio output according to these audio output signals $AOS_L$ and $AOS_R$.

(End of processing of the first interval for the centrally localized audio components)

Thereafter, when the time point "$\tau in_{MID,END}$" arrives (refer to Fig. 13), the reproduction control unit 192B generates a third gain command XC3 that designates the gain "1.0" for ending the fade-in processing for the signal M2 relating to the centrally localized region of the succeeding musical piece (i.e. of the musical piece #2), and sends the gain command to the third processing unit 213.

Moreover, at this time, the reproduction control unit 192B generates a second gain command XC2 that designates the gain $gout_{SIDE}$, and sends the command to the second processing unit 212. And the reproduction control unit 192B generates a fourth gain command XC4 that designates the gain $gin_{SIDE}$, and sends the command to the fourth processing unit 214.

For the centrally localized audio components, the third processing unit 213 takes the signal M2 as the signal MX2, and sends it to the stereo signal extraction unit 136. On the other hand, for the non-centrally localized audio components, the second processing unit 212 multiplies the signal S1 by the gain $gout_{SIDE}$ to obtain the signal SX1, which it sends to the stereo signal extraction unit 135. Moreover, for the non-centrally localized audio components, the fourth processing unit 214 multiplies the signal S2 by the gain $gin_{SIDE}$ to obtain the signal SX2, which it sends to the stereo signal extraction unit 136.

Subsequently processing is performed by the stereo signal extraction units 135 and 136, the signal addition units $137_L$ and $137_R$, and the analog processing unit 150, and the audio output signals $AOS_L$ and $AOS_R$ are generated. And the speaker units $160_L$ and $160_R$ reproduce audio output according to these audio output signals $AOS_L$ and $AOS_R$.

(End of processing of the second interval for the non-centrally localized audio components)

Thereafter, when the time point "$\tau out_{SIDE,END}=\tau in_{SIDE,END}$" arrives (refer to Fig. 13), the reproduction control unit 192B ends the fade-out processing for the signal S1 relating to the non-centrally localized regions of the preceding musical piece (i.e. of the musical piece #1) (i.e., ends the reproduction of the musical piece #1). Moreover, when the time point "$\tau out_{SIDE,END}=\tau in_{SIDE,END}$" arrives, the reproduction control unit 192B generates a fourth gain command XC4 that designates the gain "1.0" for ending the fade-in processing for the signal S2 relating to the non-centrally localized regions of the succeeding musical piece (i.e. of the musical piece #2), and sends the gain command to the fourth processing unit 214.

Moreover, at this time, the reproduction control unit 192B sends a third gain command XC3 specifying the gain as "1" to the third processing unit 213.

For the centrally localized audio components, the third processing unit 213 takes the signal M2 as the signal MX2, which it sends to the stereo signal extraction unit 136. On the other hand, for the non-centrally localized audio components, the fourth processing unit 214 takes the signal S2 as the signal SX2, which it sends to the stereo signal extraction unit 136.

Subsequently processing is performed by the stereo signal extraction unit 136, the signal addition units $137_L$ and $137_R$, and the analog processing unit 150, and the audio output signals $AOS_L$ and $AOS_R$ are generated. And the speaker units $160_L$ and $160_R$ reproduce audio output according to these audio output signals $AOS_L$ and $AOS_R$.

<<Cross-fade reproduction processing of the musical piece contents (ii)>>

Next, control will be explained of the cross-fade reproduction processing of the musical piece contents on the basis of the first interval processing information #1~#2 and the second interval processing information #1~#2 generated based upon condition (ii) described above (refer to Fig. 14).

Upon receipt of the input data IPD, according to the musical piece reproduction plan, the reproduction control unit 192B generates a reproduction command PC1 in which the musical piece #1 is designated, and supplies the reproduction command to the musical piece providing unit 121 (at the time point t=0).

In the following explanation, taking the time point at which the reproduction command PC1 is sent to the musical piece providing unit 121 as being the time point "0", the control by the reproduction control unit 192B of the reproduction processing of the musical piece contents from the time point t=0 onward will be explained, in order of the time points. In other words, in the following, the cross-fade processing for the musical piece contents at the time points t="0", "$\tau out_{MID,START}$", "$\tau out_{SIDE,START}$", "$\tau out_{SIDE,END}$", "$\tau in_{MID,START}$", "$\tau out_{MID,END}$", "$\tau in_{SIDE,START}$", "$\tau in_{SIDE,END}$", and "$\tau in_{MID,END}$" will be explained in that order (refer to Fig. 14).

Moreover, at the time point t=0, the reproduction control unit 192B sends a first gain command XC1 specifying the gain as "1.0" to the first processing unit 211. And, at the time point t=0, the reproduction control unit 192B sends a second gain command XC2 specifying the gain as "1.0" to the second processing unit 212.

The musical piece providing unit 121 reads in the musical piece audio data #1 from the audio source unit 110 as the musical piece signal MD1, and generates a signal L1 and a signal R1. And the musical piece providing unit 121 sends the signal L1 and the signal R1 that it has thus generated to the digital processing unit 130.

In the digital processing unit 130, the extraction unit 131 extracts a signal M1 and a signal S1 from the signal L1 and the signal R1. And the extraction unit 131 sends the signal M1 to the first processing unit 211, and sends the signal S1 to the second processing unit 212.

According to the first gain command XC1 (gain "1.0"), the first processing unit 211 takes the signal M1 as the signal MX1, and sends it to the stereo signal extraction unit 135. Moreover, according to the second gain command XC2 (gain "1.0"), the second processing unit 212 takes the signal S1 as the signal SX1, and sends it to the stereo signal extraction unit 135.

Subsequently processing is performed by the stereo signal extraction unit 135, the signal addition units 137L and $137_R$, and the analog processing unit 150, and the audio output signals $AOS_L$ and $AOS_R$ are generated. And the speaker units $160_L$ and $160_R$ reproduce audio output according to these audio output signals $AOS_L$ and $AOS_R$.

(Start of processing of the first interval for the centrally localized audio component)

Thereafter, when the time point "$\tau$out$_{MID,START}$" arrives (refer to Fig. 14), the reproduction control unit 192B generates a first gain command XC1 that designates the gain hout$_{MID}$ for starting the fade-out processing for the signal M1 relating to the centrally localized region of the preceding musical piece (i.e. of the musical piece #1), and sends the gain command to the first processing unit 211.

Moreover, at this time, the reproduction control unit 192B sends a second gain command XC2 specifying the gain as "1.0" to the second processing unit 212.

For the centrally localized audio component, the first processing unit 211 multiplies the signal M1 by the gain hout$_{MID}$ to obtain the signal MX1, which it sends to the stereo signal extraction unit 135. On the other hand, for the non-centrally localized audio components, the second processing unit 212 takes the signal S1 as being the signal SX1, which it sends to the stereo signal extraction unit 135.

Subsequently processing is performed by the stereo signal extraction unit 135, the signal addition units 137$_L$ and 137$_R$, and the analog processing unit 150, and the audio output signals AOS$_L$ and AOS$_R$ are generated. And the speaker units 160$_L$ and 160$_R$ reproduce audio output according to these audio output signals AOS$_L$ and AOS$_R$.

(Start of processing of the second interval for the non-centrally localized audio components)

Thereafter, when the time point "$\tau$out$_{SIDE,START}$" arrives (refer to Fig. 14), the reproduction control unit 192B generates a second gain command XC2 that designates the gain hout$_{SIDE}$ for starting the fade-out processing for the signal S1 relating to the non-centrally localized regions of the preceding musical piece (i.e. of the musical piece #1), and sends the gain command to the second processing unit 212.

Note that, at this time, the reproduction control unit 192B sends a second gain command XC1 that specifies the gain gout$_{MID}$ to the first processing unit 211.

For the centrally localized audio component, the first processing unit 211 multiplies the signal M1 by the gain hout$_{MID}$ to obtain the signal MX1, which it sends to the stereo signal extraction unit 135. On the other hand, for the non-centrally localized audio components, the second processing unit 212 multiplies the signal S1 by the gain hout$_{SIDE}$ to obtain the signal SX1, which it sends to the stereo signal extraction unit 135.

Subsequently processing is performed by the stereo signal extraction unit 135, the signal addition units 137$_L$ and 137$_R$, and the analog processing unit 150, and the audio output signals AOS$_L$ and AOS$_R$ are generated. And the speaker units 160$_L$ and 160$_R$ reproduce audio output according to these audio output signals AOS$_L$ and AOS$_R$.

(End of fade-out for the non-centrally localized audio components)

Thereafter, when the time point "$\tau$out$_{SIDE,END}$" arrives (refer to Fig. 14), the reproduction control unit 192B generates a second gain command XC2 that designates the gain "0" for ending the fade-out processing for the signal S1 relating to the non-centrally localized regions of the preceding musical piece (i.e. of the musical piece #1), and sends the gain command to the second processing unit 212.

Moreover, at this time, the reproduction control unit 192B sends a first gain command XC1 that specifies the gain hout$_{MID}$ to the first processing unit 211.

At this time, for the centrally localized audio component, the first processing unit 211 multiplies the signal M1 by the gain hout$_{MID}$ to obtain the signal MX1, which it sends to the stereo signal extraction unit 135. On the other hand, no reproduction is performed for the audio components relating to the non-centrally localized regions.

Subsequently processing is performed by the stereo signal extraction unit 135, the signal addition units 137$_L$ and 137$_R$, and the analog processing unit 150, and the audio output signals AOS$_L$ and AOS$_R$ are generated. And the speaker units 160$_L$ and 160$_R$ reproduce audio output according to these audio output signals AOS$_L$ and AOS$_R$.

(Start of fade-in for the centrally localized audio component)

Thereafter, when the time point "$\tau$in$_{MID,START}$" arrives (refer to Fig. 14), the reproduction control unit 192B generates a reproduction command PC2 that designates the musical piece #2, and sends the command to the musical piece providing unit 122. Upon receipt of the reproduction command PC2, the musical piece providing unit 122 reads in the musical piece audio data #2 from the audio source unit 110 as the musical piece signal MD2, and generates a signal L2 and a signal R2. And the musical piece providing unit 122 sends the signal L2 and the signal R2 that it has thus generated to the digital processing unit 130.

In the digital processing unit 130, the extraction unit 132 extracts a signal M2 and a signal S2 from the signal L2 and the signal R2. And the extraction unit 132 sends the signal M2 to the third processing unit 213, and sends the signal S2 to the fourth processing unit 214.

Furthermore, when the time point "$\tau in_{MID,START}$" arrives, the reproduction control unit 192B generates a third gain command XC3 that designates the gain $hin_{MID}$ for starting the fade-in processing for the signal M2 relating to the centrally localized regions of the succeeding musical piece (i.e. of the musical piece #2), and sends the gain command to the third processing unit 213.

Moreover, at this time, the reproduction control unit 192B sends a first gain command XC1 specifying the gain as $hout_{MID}$ to the first processing unit 211. And, at this time, the reproduction control unit 192B sends a second gain command XC2 specifying the gain as "0" to the second processing unit 212.

At this time, for the centrally localized audio component, the first processing unit 211 multiplies the signal M1 by the gain $hout_{MID}$ to obtain the signal MX1, which it sends to the stereo signal extraction unit 135. Moreover, the third processing unit 213 multiplies the signal M2 by the gain $hin_{MID}$ to obtain the signal MX2, which it sends to the stereo signal extraction unit 136. In other words, cross-fade is performed for the audio component relating to the centrally localized region. On the other hand, reproduction is not performed for the audio components relating to the non-centrally localized regions.

Subsequently processing is performed by the stereo signal extraction units 135 and 136, the signal addition units $137_L$ and $137_R$, and the analog processing unit 150, and the audio output signals $AOS_L$ and $AOS_R$ are generated. And the speaker units $160_L$ and $160_R$ reproduce audio output according to these audio output signals $AOS_L$ and $AOS_R$.

(End of fade-out for the centrally localized audio component)

Thereafter, when the time point "$\tau out_{MID,END}$" arrives (refer to Fig. 14), the reproduction control unit 192B terminates fade-out processing of the signal M1 relating to the centrally positioned region of the preceding musical piece (i.e. of the musical piece #1) (i.e. ends reproduction of the musical piece #1).

Moreover, at this time, the reproduction control unit 192B sends a third gain command XC3 that specifies the gain $hin_{MID}$ to the third processing unit 213.

For the centrally localized audio component, the third processing unit 213 multiplies the signal M2 by the gain $hin_{MID}$ to obtain the signal MX2, which it sends to the stereo signal extraction unit 136. On the other hand, reproduction is not performed for the non-centrally localized audio components.

Subsequently processing is performed by the stereo signal extraction unit 136, the signal addition units $137_L$ and $137_R$, and the analog processing unit 150, and the audio output signals $AOS_L$ and $AOS_R$ are generated. And the speaker units $160_L$ and $160_R$ reproduce audio output according to these audio output signals $AOS_L$ and $AOS_R$.

(Start of fade-in for the non-centrally localized audio components)

Thereafter, when the time point "$\tau in_{SIDE,START}$" arrives (refer to Fig. 14), the reproduction control unit 192B generates a fourth gain command XC4 that designates the gain $hin_{SIDE}$ for starting the fade-in processing for the signal S2 relating to the non-centrally localized regions of the succeeding musical piece (i.e. of the musical piece #2), and sends the gain command to the fourth processing unit 214.

Moreover, at this time, the reproduction control unit 192B sends a third gain command XC3 that specifies the gain $hin_{MID}$ to the third processing unit 213.

For the centrally localized audio component, the third processing unit 213 multiplies the signal M2 by the gain $hin_{MID}$ to obtain the signal MX2, which it sends to the stereo signal extraction unit 136. On the other hand, for the non-centrally localized audio components, the fourth processing unit 214 multiplies the signal S2 by the gain $hin_{SIDE}$ to obtain the signal SX2, which it sends to the stereo signal extraction unit 136.

Subsequently processing is performed by the stereo signal extraction unit 136, the signal addition units $137_L$ and $137_R$, and the analog processing unit 150, and the audio output signals $AOS_L$ and $AOS_R$ are generated. And the speaker units $160_L$ and $160_R$ reproduce audio output according to these audio output signals $AOS_L$ and $AOS_R$.

(End of processing of the second interval for the non-centrally localized audio components)

Moreover, when the time point "$\tau in_{SIDE,END}$" arrives (refer to Fig. 14), the reproduction control unit 192B generates a fourth gain command XC4 that designates the gain "1.0" for ending the fade-in processing for the signal S2 relating to the non-centrally localized regions of the succeeding musical piece (i.e. of the musical piece #2), and sends the gain command to the fourth processing unit 214.

Moreover, at this time, the reproduction control unit 192B sends a third gain command XC3 that specifies the gain $hin_{MID}$ to the third processing unit 213.

For the centrally localized audio component, the third processing unit 213 multiplies the signal M2 by the gain $hin_{MID}$ to obtain the signal MX2, which it sends to the stereo signal extraction unit 136. On the other hand, for the non-centrally localized audio components, the fourth processing unit 214 takes the signal S2 as the signal SX2, which it sends to the stereo signal extraction unit 136.

Subsequently processing is performed by the stereo signal extraction unit 136, the signal addition units 137L and 137R, and the analog processing unit 150, and the audio output signals $AOS_L$ and AOSR are generated. And the speaker units $160_L$ and $160_R$ reproduce audio output according to these audio output signals $AOS_L$ and $AOS_R$.

(End of processing of the first interval for the centrally localized audio component)

Thereafter, when the time point "$\tau in_{MID,END}$" arrives (refer to Fig. 14), the reproduction control unit 192B generates a third gain command XC3 that designates the gain "1.0" for ending the fade-in processing for the signal M2 relating to the centrally localized region of the succeeding musical piece (i.e. of the musical piece #2), and sends the gain command to the third processing unit 213.

Moreover, at this time, the reproduction control unit 192B sends a fourth gain command XC4 specifying the gain as "1.0" to the fourth processing unit 214.

For the centrally localized audio component, the third processing unit 213 takes the signal M2 as the signal MX2, which it sends to the stereo signal extraction unit 136. On the other hand, for the non-centrally localized audio components, the fourth processing unit 212 takes the signal S2 as the signal SX2, which it sends to the stereo signal extraction unit 136.

Subsequently processing is performed by the stereo signal extraction unit 136, the signal addition units $137_L$ and $137_R$, and the analog processing unit 150, and the audio output signals $AOS_L$ and $AOS_R$ are generated. And the speaker units $160_L$ and $160_R$ reproduce audio output according to these audio output signals $AOS_L$ and $AOS_R$.

As explained above, in the second embodiment, in a similar manner to the case with the first embodiment, the signal M1 for the audio component relating to the centrally localized region and the signal S1 for the audio components relating to the non-centrally localized regions are extracted from the musical piece signal MD1, and the signal M2 for the audio component relating to the centrally localized region and the signal S2 for the audio components relating to the non-centrally localized regions are extracted from the musical piece signal MD2.

When performing cross-fade reproduction of the preceding musical piece and the succeeding musical piece, under the control of the reproduction control unit 192B, the cross-fade processing unit 133 performs fade-out processing for the preceding musical piece and performs fade-in processing for the succeeding musical piece, upon each of the audio component signals (M1 and M2) relating to the centrally localized regions and each of the audio component signals (S1 and S2) relating to their non-centrally localized regions.

Moreover, when controlling this fade-out processing and fade-in processing, the reproduction control unit 192B analyzes the tonal characteristics of the final portion of the preceding musical piece and the tonal characteristics of the initial portion of the succeeding musical piece. And, when it has been evaluated that a sense of auditory discomfort may occur while performing the cross-fade reproduction for the audio components relating to the centrally localized regions, but that it is difficult for a sense of auditory discomfort to occur while performing the cross-fade reproduction for the audio components relating to the non-centrally localized regions, then the reproduction control unit 192B makes the first interval length of the first interval from the start of fade-out processing to the end of fade-in processing relating to the centrally localized regions be shorter than the second interval length of the second interval from the start of fade-out processing to the end of fade-in processing relating to the non-centrally localized regions.

Furthermore, during such control, it is arranged for the fade-out processing for the centrally localized region to be ended before the start of the fade-in processing for the centrally localized region, so that cross-fade reproduction is not performed for the centrally localized regions. Moreover, during such control, it is arranged for the fade-out processing for the non-centrally localized regions to be ended after the start of the fade-in processing for the non-centrally localized regions, so that cross-fade reproduction is performed for the non-centrally localized regions.

In this manner, when it is evaluated that a sense of auditory discomfort may occur while performing the cross-fade reproduction for the audio components relating to the centrally localized regions, but that it is difficult for a sense of auditory discomfort to occur while performing the cross-fade reproduction for the audio components relating to the non-centrally localized regions, then cross-fade reproduction is only performed for the audio components relating to the non-centrally localized regions.

Due to this, with the second embodiment, it is possible to avoid failure of the musical harmony when it is evaluated that a sense of auditory discomfort may occur while performing cross-fade reproduction for the audio components relating to the centrally localized regions.

Furthermore, in the second embodiment, when it is evaluated that a sense of auditory discomfort may occur while performing the cross-fade reproduction for the audio components relating to the non-centrally localized regions, but that it is difficult for a sense of auditory discomfort to occur while performing the cross-fade reproduction for the audio components relating to the centrally localized regions, then the reproduction control unit 192B makes the first interval length of the first interval from the start of fade-out processing to the end of fade-in processing relating to the centrally localized regions be longer than the second interval length of the second interval from the start of fade-out processing to the end of fade-in processing relating to the non-centrally localized regions.

Yet further, during such control, it is arranged for the fade-out processing relating to the centrally localized regions to be ended after the start of the fade-in processing relating to the centrally localized regions, so that cross-fade reproduction is performed for the centrally localized regions. Moreover, during such control, it is arranged for the fade-out processing for the non-centrally localized regions to be ended before the start of the fade-in processing for the non-centrally localized regions, so that cross-fade reproduction is not performed for the non-centrally localized regions.

In this manner, when it is evaluated that a sense of auditory discomfort may occur while performing the cross-fade reproduction for the audio components relating to the non-centrally localized regions, but that it is difficult for a sense of auditory discomfort to occur while performing the cross-fade reproduction for the audio components relating to the centrally localized regions, then cross-fade reproduction is only performed for the audio components relating to the centrally localized regions.

Due to the above, in the second embodiment, when performing cross-fade reproduction for the audio components relating to the non-centrally localized regions, it is possible to prevent a failure of musical harmony if it is considered that a sense of auditory discomfort may occur.

Thus, according to the second embodiment, when cross-fade reproduction is performed for musical pieces having a plurality of channels, it is possible to suppress the occurrence of auditory discomfort during the cross-fade interval, in a similar manner to the case with the first embodiment described above.


[Modification of embodiment]

The present invention is not to be considered as being limited to the embodiments described above; modifications of various kinds are possible to implement thereto.

For example, in the first embodiment described above, it was arranged to perform cross-fade playback both for the audio components relating to the centrally localized regions and for the audio components relating to the non-centrally localized regions. By contrast, it would also be acceptable to arrange to perform cross-fade reproduction only for the audio components relating to the non-centrally localized regions.

Moreover, in the first embodiment described above, for the audio components relating to the centrally localized region, it was arranged for the start time point of the fade-out processing for the preceding musical piece and the start time point of the fade-in processing for the succeeding musical piece to be the same, and also it was arranged for the end time point of the fade-out processing for the preceding musical piece and the end time point of the fade-in processing for the succeeding musical piece to be the same (refer to Fig. 9). By contrast, of course it would also be acceptable to make the start time point of the fade-out processing for the preceding musical piece and the start time point of the fade-in processing for the succeeding musical piece be different, and also it would be acceptable to make the end time point of the fade-out processing for the preceding musical piece and the end time point of the fade-in processing for the succeeding musical piece be different.

Furthermore, in the first embodiment described above, for the audio components relating to the non-centrally localized regions, it was arranged for the start time point of the fade-out processing for the preceding musical piece and the start time point of the fade-in processing for the succeeding musical piece to be the same, and also it was arranged for the end time point of the fade-out processing for the preceding musical piece and the end time point of the fade-in processing for the succeeding musical piece to be the same (refer to Fig. 9). By contrast, of course it would also be acceptable to make the start time point of the fade-out processing for the preceding musical piece and the start time point of the fade-in processing for the succeeding musical piece be different, and also it would be acceptable to make the end time point of the fade-out processing for the preceding musical piece and the end time point of the fade-in processing for the succeeding musical piece be different.

Yet further, in the second embodiment described above, it was arranged for the reproduction control unit to generate the analysis information on the basis of the signals for the audio components relating to the centrally localized regions and on the basis of the signals for the audio components relating to the non-centrally localized regions. By contrast, it would also be acceptable to arrange to generate the analysis information on the basis of the signals for the audio components on the L channel and on the basis of the signals for the audio components on the R channel. Moreover, it would also be acceptable to arrange to generate the analysis information on the basis of the signals for the audio components relating to the centrally localized regions, on the basis of the signals for the audio components relating to the non-centrally localized regions, on the basis of the signals for the audio components on the L channel and on the basis of the signals for the audio components on the R channel.

Even further, in the second embodiment described above, it was arranged to generate the analysis information before performing the cross-fade playback of the musical pieces. By contrast, it would also be acceptable to arrange to generate the analysis information during the cross-fade reproduction of the musical pieces.

Still further, in the second embodiment described above, it was arranged for the reproduction control unit to generate the analysis information. By contrast, it would also be acceptable to arrange for some other device to generate the analysis information, and for the reproduction device to acquire this analysis information that has thus been generated.

Moreover, in the first and second embodiments described above, it was arranged to perform fade-out processing of the preceding musical piece and to perform fade-in processing of the succeeding musical piece by employing gain functions for the signals for the audio components relating to the centrally localized regions and for the signals for the audio components relating to the non-centrally localized regions having shapes as shown in Figs. 9, 13, and 14. However, the shapes of these gain functions are only examples; of course it would also be acceptable to perform the fade-in processing and the fade-out processing by employing gain functions having other shapes, such as functions that temporarily increase the levels of the audio signals, or functions that take into consideration correction of the perceived volume levels.

Furthermore, in the first and second embodiments described above, it was arranged for the reproduction control unit to perform fade-out processing for the preceding musical piece and fade-in processing for the succeeding musical piece automatically upon each of the signals for the audio components relating to the centrally localized regions and the signals for the audio components relating to the non-centrally localized regions. By contrast, it would also be acceptable to arrange for the mode of control for the fade-out processing and the mode of control for the fade-in processing to be performed manually upon each of the signals for the audio components relating to the centrally localized regions and the signals for the audio components relating to the non-centrally localized regions.

In this type of case, it would also be acceptable to arrange for a so-called disk jockey (DJ) to perform input operation for fade-out processing for the preceding musical piece and for fade-in processing for the succeeding musical piece, for each of the signals for the audio components relating to the centrally localized regions and the signals for the audio components relating to the non-centrally localized regions.

Yet further, in the first and second embodiments described above, it would also be acceptable to arrange to add sound effects such as additional reverberation or the like to the signals MX1, SX1, MX2, and SX2 that pass through the cross-fade processing unit.

Still further, in the first and second embodiments described above, it was arranged to perform cross-fade processing for stereo musical pieces in the two-channel stereo format. By contrast, it would also be acceptable to arrange to perform cross-fade processing for multi-channel surround-sound musical pieces. In this case, for example, the center channel signals may be taken as being the audio components of the centrally localized regions. Furthermore, the front left channel signal and the front right channel signal (both together being termed "front channel signals") may be taken as being signals for audio components relating to first non-centrally localized regions, and the rear left channel signal and the rear right channel signal (both together being termed "rear channel signals") may be taken as being signals for audio components relating to second non-centrally localized regions.

And it would be possible to arrange to perform fade-out processing and fade-in processing upon each of the audio components for the center channel signals, the audio components for the front channel signals, and the audio components for the rear channel signals. In this case, when the first interval is taken as being from the start of fade-out processing to the end of fade-in processing for the audio component of the center channel signal, the second interval is taken as being from the start of fade-out processing to the end of fade-in processing for the audio component of the front channel signal, and the third interval is taken as being from the start of fade-out processing to the end of fade-in processing for the audio component of the rear channel signal, then it would be possible to arrange for the lengths of the intervals to be shorter in the order: the first interval, the second interval, and the third interval. And, for example, it would be possible to arrange to perform cross-fade reproduction for each of the first interval, the second interval, and the third interval.

It would be acceptable to arrange to build a part or all of the reproduction device described above (except for the audio source unit, the input unit, and the speaker units) as a computer including a central processing unit (CPU: Central Processing Unit) and so on which serves as a calculating device, and to implement the functions of the reproduction device according to one of the embodiments described above by a program that is prepared in advance being executed by that computer. This program could be recorded upon a recording medium capable of being read in by a computer, such as a hard disk, a CD-ROM, a DVD, or the like, and would be read out by the computer from that recording medium and executed. Moreover, it would be possible to arrange for this program to be acquired in the format of being recorded upon a transportable recording medium such as a CD-ROM, a DVD, or the like, or to be acquired in a format of being distributed via a network such as the internet or the like.

**Claims**

1.  A reproduction device that performs cross-fade reproduction of a preceding musical piece and a succeeding musical piece, comprising:

    an extraction unit that extracts audio components from each of the sounds of said preceding musical piece and said succeeding musical piece, corresponding to a plurality of localized regions that are determined in advance; and

a cross-fade processing unit that executes cross-fade processing in which, for each of said localized regions, fade-out processing and fade-in processing are performed for a pair of corresponding audio components of said preceding musical piece and said succeeding musical piece.

2. The reproduction device according to Claim 1, wherein said plurality of localized regions are a centrally localized region and non-centrally localized regions.

3. The reproduction device according to Claim 2, wherein:

a first interval length of a first interval from the start of fade-out processing to the end of fade-in processing relating to said centrally localized region is shorter than a second interval length of a second interval from the start of fade-out processing to the end of fade-in processing relating to said non-centrally localized regions; said first interval is within said second interval; and
the fade-out processing relating to said non-centrally localized regions ends after the start of the fade-in processing relating to said non-centrally localized regions.

4. The reproduction device according to Claim 2, further comprising:

a storage unit that stores first analysis information for a corresponding audio component relating to said centrally localized region at the final portion of said preceding musical piece, second analysis information for a corresponding audio component relating to said centrally localized region at the initial portion of said succeeding musical piece, third analysis information for corresponding audio components relating to said non-centrally localized regions at the final portion of said preceding musical piece, and fourth analysis information for corresponding audio components relating to said non-centrally localized regions at the initial portion of said succeeding musical piece; and
a determination unit that along with, on the basis of said first analysis information and said second analysis information, determining a processing mode by said cross-fade processing unit for the pair of corresponding audio components relating to said centrally localized region in said first interval from the start of fade-out processing to the end of fade-in processing relating to said centrally localized region, also determines, on the basis of said third analysis information and said fourth analysis information, a processing mode by said cross-fade processing unit for the pairs of corresponding audio components relating to said non-centrally localized regions in said second interval from the start of fade-out processing to the end of fade-in processing relating to said non-centrally localized regions.

5. The reproduction device according to Claim 4, further comprising a generation unit that generates said first through fourth analysis information.

6. The reproduction device according to Claim 4, wherein:
said first through fourth analysis information are tonal characteristic information; and said determination unit:

determines a processing mode by said cross-fade processing unit in said first interval relating to said centrally localized regions on the basis of a first degree of tonal similarity obtained by comparing together said first analysis information and said second analysis information; and
determines a processing mode by said cross-fade processing unit in said second interval relating to said non-centrally localized regions on the basis of a second degree of tonal similarity obtained by comparing together said third analysis information and said fourth analysis information.

7. The reproduction device according to Claim 6, wherein:
when said first degree of tonal similarity is less than a first threshold value and said second degree of tonal similarity is greater than or equal to a second threshold value, then said cross-fade processing unit:

makes said first interval length of said first interval shorter than said second interval length of said second interval; ends the fade-out processing relating to said centrally localized regions before the start of the fade-in processing relating to said centrally localized regions; and
ends the fade-out processing relating to said non-centrally localized regions after the start of the fade-in processing relating to said non-centrally localized regions.

**8.** The reproduction device according to Claim 6, wherein:
when said first degree of tonal similarity is greater than or equal to a third threshold value, and said second degree of tonal similarity is less than a fourth threshold value, then said cross-fade processing unit:

makes said first interval length of said first interval longer than said second interval length of said second interval;
ends the fade-out processing relating to said centrally localized regions after the start of the fade-in processing relating to said centrally localized regions; and
ends the fade-out processing relating to said non-centrally localized regions before the start of the fade-in processing relating to said non-centrally localized regions.

**9.** The reproduction device according to Claim 1, wherein:

said preceding musical piece and said succeeding musical piece are stereo musical pieces;
the audio components of said centrally localized regions are stereo sum signals of said stereo musical pieces; and
the audio components of said non-centrally localized regions are stereo difference signals of said stereo musical pieces.

**10.** The reproduction device according to Claim 1, wherein
said plurality of localized regions include centrally localized regions;
said preceding musical piece and said succeeding musical piece are surround-sound musical pieces; and
the audio components of said centrally localized regions include audio components of center channel signals of said surround-sound musical pieces.

**11.** A reproduction method employed by a reproduction device that comprises an extraction unit and a cross-fade processing unit, and that performs cross-fade reproduction of a preceding musical piece and a succeeding musical piece, comprising the steps of:

an extracting step in which audio components are extracted from the sounds of each of said preceding musical piece and said succeeding musical piece, by said extraction unit corresponding to a plurality of localized regions that are determined in advance; and
a cross-fade processing step of executing cross-fade processing in which, for each of said localized regions, fade-out processing and fade-in processing are performed by said cross-fade processing unit for a pair of corresponding audio components of said preceding musical piece and said succeeding musical piece.

**12.** A reproduction program, wherein it causes a computer included in a reproduction device to execute a reproduction method according to Claim 11.

**13.** A recording medium, wherein a reproduction program according to Claim 12 is recorded thereupon in a form that can be read by a computer in a reproduction device.

Fig. 1

100A

EP 3 499 497 A1

110

Audio Source Unit

MCD

Musical Piece Contents Information

121

Musical Piece Providing Unit

MD1

122

Musical Piece Providing Unit

MD2

L1

R1

L2

R2

130

Digital Processing Unit

CLD

CRD

150

Analog Processing Unit

AOS_L

AOS_R

160_L

160_R

180

Input Unit

IPD

MCI

PC2

PC1

XC

190A

Control Unit

# Fig. 2

MCD

| Musical Piece Contents Information Item #1 |
|---|
| Musical Piece Contents Information Item #2 |
| |

| Musical Piece Contents Identifier #1 |
|---|
| Musical Piece Audio Data Item #1 |
| Audio Recording Time Item #1 |

| Musical Piece Contents Identifier #2 |
|---|
| Musical Piece Audio Data Item #2 |
| Audio Recording Time Item #2 |

# Fig. 3

EP 3 499 497 A1

Fig. 4

EP 3 499 497 A1

# Fig. 5

RTI

Audio Recording Time
Information Item #1

Audio Recording Time
Information Item #2

Musical Piece
Contents Identifier #1

Audio Recording Time
Item #1

Musical Piece
Contents Identifier #2

Audio Recording Time
Item #2

# Fig. 6

XFA

| First Interval Processing Information XFA1 (Centrally Localized Region) | $\Delta Tout_{MID,START}$ |
| --- | --- |
| | $\Delta Tout_{MID,END}$ |
| | $Gout_{MID}$ |
| | $\Delta Tin_{MID,START}$ |
| | $\Delta Tin_{MID,END}$ |
| | $Gin_{MID}$ |
| | $\Delta T$ |
| Second Interval Processing Information XFA2 (Non-centrally Localized Regions) | $\Delta Tout_{SIDE,START}$ |
| | $\Delta Tout_{SIDE,END}$ |
| | $Gout_{SIDE}$ |
| | $\Delta Tin_{SIDE,START}$ |
| | $\Delta Tin_{SIDE,END}$ |
| | $Gin_{SIDE}$ |
| | $\Delta T$ |

# Fig. 7

Fig. 8

# Fig. 9

# Fig. 10

# Fig. 11

ANI

| | | Initial Portion | | Final Portion |
|---|---|---|---|---|
| Musical Piece Contents #1 | MID | ——— | MID | $ANI\#1_{MID,END}$ |
| | SIDE | ——— | SIDE | $ANI\#1_{SIDE,END}$ |
| Musical Piece Contents #2 | MID | $ANI\#2_{MID,START}$ | MID | $ANI\#2_{MID,END}$ |
| | SIDE | $ANI\#2_{SIDE,START}$ | SIDE | $ANI\#2_{SIDE,END}$ |
| ⋮ | ⋮ | ⋮ | ⋮ | ⋮ |
| Musical Piece Contents #(P) | MID | $ANI\#P_{MID,START}$ | MID | ——— |
| | SIDE | $ANI\#P_{SIDE,START}$ | SIDE | ——— |

# Fig. 12

XFB

| Musical Piece Contents | | Interval Processing Information |
|---|---|---|
| Musical Piece Contents #1 ~Musical Piece Contents #2 | MID | First Interval Processing Information #1~#2 |
| | SIDE | Second Interval Processing Information #1~#2 |
| Musical Piece Contents #2 ~Musical Piece Contents #3 | MID | First Interval Processing Information #2~#3 |
| | SIDE | Second Interval Processing Information #2~#3 |
| ⋮ | ⋮ | ⋮ |
| Musical Piece Contents #(p-1) ~Musical Piece Contents #p | MID | First Interval Processing Information #(P-1)~#P |
| | SIDE | Second Interval Processing Information #(P-1)~#P |

# Fig. 13

# Fig. 14

## INTERNATIONAL SEARCH REPORT

| International application No. |
| --- |
| PCT/JP2016/073265 |

**A. CLASSIFICATION OF SUBJECT MATTER**

*G10H1/00(2006.01)i, H04S7/00(2006.01)i*

According to International Patent Classification (IPC) or to both national classification and IPC

**B. FIELDS SEARCHED**

Minimum documentation searched (classification system followed by classification symbols)
G10H1/00, H04S7/00

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996–2016 |
| Kokai Jitsuyo Shinan Koho | 1971–2016 | Toroku Jitsuyo Shinan Koho | 1994–2016 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2008-27552 A (D & M Holdings Inc.), 07 February 2008 (07.02.2008), entire text; all drawings (Family: none) | 1-13 |
| A | JP 2009-44263 A (Sony Corp.), 26 February 2009 (26.02.2009), entire text; all drawings & US 2009/0043411 A1 entire text; all drawings & CN 101365266 A | 1-13 |

☐ Further documents are listed in the continuation of Box C.　　☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 07 October 2016 (07.10.16) | 18 October 2016 (18.10.16) |

| Name and mailing address of the ISA/ | Authorized officer |
| --- | --- |
| Japan Patent Office 3-4-3,Kasumigaseki,Chiyoda-ku, Tokyo 100-8915,Japan | |
| | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008027552 A